# EUROPEAN PATENT APPLICATION

(11) **EP 4 704 369 A1**
(43) Date of publication of application: **04.03.2026**
(21) Application number: 25197906.8
(22) Date of filing: 25.08.2025
(51) Int. Cl.: H04L 9/08

(54) **PHYSICAL UNCLONABLE FUNCTION-BASED ENCRYPTED COMMUNICATION METHOD AND COMPUTING DEVICE FOR PERFORMING THE SAME**

(30) Priority: 26.08.2024 KR 20240114589; 26.08.2024 KR 20240114590; 04.03.2025 KR 20250027399; 04.03.2025 KR 20250027400; 21.03.2025 KR 20250036861; 21.03.2025 KR 20250036862; 21.03.2025 KR 20250036863; 12.08.2025 KR 20250111838
(71) Applicant: Chungbuk National University Industry-Academic Cooperation Foundation, Cheongju-si, Chungcheongbuk-do 28644 (KR)
(72) Inventor: HONG, Jong-Phil, 30100 Sejong-si (KR)
(74) Representative: Isarpatent

(57) **Abstract**

The electronic device according to one example disclosed, comprises a PUF circuit which inputs a random challenge signal into a physically unclonable function to generate a private key; a communication device which receives an encrypted message by a temporarily generated message session key, and an encrypted message session key generated by encrypting the message session key with a public key corresponding to the private key, from a counterpart electronic device; and a controller which obtains the message session key by decrypting the encrypted message session key with the private key, and decrypts the encrypted message with the message session key.

## Description

### [TECHNICAL FIELD]

The examples of the present invention relate to technologies of a physical unclonable function-based encrypted communication method and a computing device for performing the same.

### [BACKGROUND ART]

With the widespread of distribution of internet and smart phones, the market of Internet of Things in which numerous people and devices are interconnected through terminals such as smart devices, sensors, and the like has been expanding. Then, data transmitted between Internet of Things devices (hereinafter, electronic devices) should ensure confidentiality (only authorized devices can read data), integrity (data has not been modulated), and authentication (verification of identities of transmitters and receivers). In order to ensure confidentiality, integrity and authentication of data, cryptographic protocol technology is used in data transmission. The cryptographic protocol technology can be largely divided into a technology for authenticating an electronic device by a server and a technology for communicating messages between electronic devices authenticated by the server.

On the other hand, since electronic devices have ultra-small and low-power properties, it is difficult to use a cryptographic protocol that requires bulky hardware, a large amount of computation, and high resource consumption. Accordingly, a cryptographic protocol that requires only lightweight hardware, a small amount of computation, and low resource consumption is required.

In addition, since electronic devices are generally easy to carry, when the electronic devise are stolen, there is a risk that encryption information stored in the electronic devices (for example, various kinds of keys of a cryptographic protocol) may be hacked. Accordingly, a cryptographic protocol that does not store encryption information it in a memory, but temporarily generates when necessary is required.

### [PRIOR ART]

### [PATENT DOCUMENT]

(Patent document 01) Korean Patent Publication No. 10-2022-0138648 (2022.10.13)

### [DISCLOSURE]

### [TECHNICAL PROBLEM]

A problem to be solved by the present invention is to provide an encrypted communication method that requires lightweight hardware, a small amount of computation, and low resource consumption.

Another problem to be solved by the present invention is to provide an encrypted communication method which temporarily generates information required for cryptographic communication.

In addition, other problem to be solved by the present invention is to provide an encryption key sharing method which temporarily generates encrypted information, when necessary.

The problems to be solved by the present invention are not limited to those mentioned above, and other problems to be solved that are not mentioned can be clearly understood by those skilled in the art from the following description.

### [TECHNICAL SOLUTION]

According to one aspect, an electronic device, comprising a PUF circuit which inputs a random challenge signal into a physically unclonable function to generate a private key; a communication device which receives an encrypted message by a temporarily generated message session key, and an encrypted message session key generated by encrypting the message session key with a public key corresponding to the private key, from a counterpart electronic device; and a controller which obtains the message session key by decrypting the encrypted message session key with the private key, and decrypts the encrypted message with the message session key, is provided.

According to one example, the communication device, may receive the random challenge signal from a server connected to each of the electronic device and the counterpart electronic device via a channel independent of the outside, and the public key, may be generated, at the server, based on a private key retrieved in response to the random challenge signal, from a challenge response pair database previously stored for the electronic device.

According to one example, the private key generated from the PUF circuit and the private key retrieved may be identical.

According to one example, the controller, may generate a second shared session key based on the private key and the encrypted session key, and decrypts the encrypted session key with the second shared session key.

According to one example, the message session key, may be encrypted with a first shared session key generated based on the public key corresponding to the private key and the message session key, in the counterpart electronic device.

According to one example, the electronic device, may further comprise a random number generator which generates a new random number that is not duplicated according to environmental conditions, when a new message is generated, and generates a new message session key based on the new random number.

According to one example, the controller, may generate a signature ensuring integrity of transmission data, based on the private key, and the communication device, may transmit the transmission data and the signature to the counterpart electronic device.

According to one example, the electronic device, may further comprise a random number generator which generates a random number that is not duplicated according to environmental conditions, and generates a signature session key based on the random number, and the controller, may generate the signature by inputting the private key and the signature session key, into a signature generation function that cannot predict an input signal corresponding to an output signal from the output signal.

According to one example, the communication device, may communicate with a server connected to each of the electronic device and the counterpart electronic device via a channel independent of the outside, and the public key, may be generated in response to the random challenge signal at the server and be transmitted to the counterpart electronic device, and the signature, may be verified based on the public key, in the counterpart electronic device.

According to one example, the communication device, may receive a certificate of the counterpart electronic device, from a server connected to each of the electronic device and the counterpart electronic device via a channel independent of the outside, and the controller, may obtain a public key of the counterpart electronic device by verifing the certificate based on a private key generated through the PUF circuit.

According to one example, the electronic device, may further comprise a random number generator which generates a random number that is not duplicated according to environmental conditions, and generate a message session key based on the random number, and the controller, may encrypt data to be transmitted to the counterpart electronic device with the message session key, and encrypt the message session key with the public key of the counterpart electronic device.

According to one example, the certificate, may comprise a first authentication code generated, at the server, based on a private key retrieved in response to the random challenge signal from the challenge response pair database previously stored for the electronic device, and one or more of a plurality of device information regarding the counterpart electronic device, and the controller, may generate a second authentication code based on a private key generated through the PUF circuit and one or more of the plurality of device information, and authenticate the certificate based on the first authentication code and the second authentication code.

According to one example, the electronic device, may further comprise a challenge signal generation device which generates a plurality of challenge signals, by receiving as an input an initial signal from the server connected via a channel independent of the outside through the communication device, and the PUF circuit, may generate a plurality of response information corresponding, using each of the plurality of challenge signals as an input, and the controller, may generate a plurality of challenge response pairs by pairing each of the plurality of challenge signals with a plurality of response information corresponding, and the communication device, may transmit the plurality of challenge response pairs to the server.

According to another aspect, a method, comprising generating a private key by inputting a random challenge signal into a physically unclonable function, through a PUF circuit; receiving an encrypted message by a temporarily generated message session key, and an encrypted message session key generated by encrypting the message session key with a public key corresponding to the private key, from a counterpart electronic device; obtaining the message session key by decrypting the encrypted message session key with the private key; and decrypting the encrypted message with the message session key, is provided.

### [ADVANTAGEOUS EFFECTS]

According to one example disclosed, cryptographic communication can be performed while requiring lightweight hardware, a small amount of computation and low resource consumption.

In addition, according to one example disclosed, cryptographic communication can be performed, by temporarily generating information required for cryptographic communication when necessary.

Furthermore, according to one example disclosed, a key used in a cryptographic protocol can be shared while requiring lightweight hardware, a small amount of computation and low resource consumption.

In addition, according to one example disclosed, a digital signature for generating and verifying a signature can be performed while requiring lightweight hardware, a small amount of computation and low resource consumption.

Moreover, according to one example disclosed, a digital signature for generating and verifying a signature can be performed, by temporarily generating information required for cryptographic communication when necessary.

The effects of the present invention are not limited to those mentioned above, and other effects not mentioned will be clearly understood by those skilled in the art from the following description.

### [BRIEF DESCRIPTION OF THE DRAWINGS]

The present disclosure can be easily understood from the following detailed description and the accompanying drawings thereto, and reference numerals refer to structural elements.
FIG. 1a is a schematic diagram showing a system for performing a PUF-based encrypted communication method, according to one example of the present invention.
FIG. 1b is a diagram for describing a process of a PUF-based encrypted communication method, according to one example of the present invention.
FIG. 2 is a block diagram showing the configuration of an electronic device that constructs a challenge response pair database and performs PUF-based cryptographic communication, according to one example of the present invention.
FIG. 3 is a flowchart showing a process for constructing the PUF-based challenge response pair database according to one example of the present invention.
FIG. 4 is a flowchart for describing a method for generating a plurality of challenge signals and a plurality of corresponding response information by an electronic device, according to one example of the present invention.
FIG. 5 is a flowchart for describing a method for generating response information, according to one example of the present invention.
FIG. 6 is a flowchart for describing a method for generating a private key, according to one example of the present invention.
FIG. 7 is a flowchart showing a process of authenticating an electronic device, based on a constructed challenge response pair database, according to one example of the present invention.
FIG. 8 is a flowchart showing a process by a server of authenticating an electronic device, according to one example of the present invention.
FIG. 9 is a flowchart showing a process by a server of sharing a first public key of a first electronic device with a second electronic device, according to one example of the present invention.
FIG. 10 is a flowchart showing an operation of a server, in which the server shares a first public key of a first electronic device with a second electronic device, according to one example of the present invention.
FIG. 11 is a flowchart showing a process by a server of sharing a second public key of a second electronic device with a first electronic device, according to one example of the present invention.
FIG. 12 is a flowchart showing an operation of a server, in which the server shares a second public key of a second electronic device with a first electronic device, according to one example of the present invention.
FIG. 13 is a flowchart showing a process by a first electronic device of transmitting a message to a second electronic device, according to one example of the present invention.
FIG. 14 is a flowchart showing a process by a second electronic device of receiving a message from a first electronic device, according to one example of the present invention.
FIG. 15 is a flowchart showing a process by a first electronic device of transmitting a message to a second electronic device, according to one example of the present invention.
FIG. 16 is a flowchart showing a process by a second electronic device of receiving a message from a first electronic device, according to one example of the present invention.
FIG. 17 is a flowchart showing a process by a first electronic device of obtaining a public key of a second electronic device by verifying a second certificate of the second electronic device, according to one example of the present invention.
FIG. 18 is a flowchart showing a process by a server of sharing a second certificate including a public key of a second electronic device with a first electronic device, according to one example of the present invention.
FIG. 19 is a flowchart showing a process by a first electronic device of obtaining a public key of a second electronic device by verifying a second certificate of the second electronic device received from a server, according to one example of the present invention.
FIG. 20 is a flowchart showing a process of a first electronic device of transmitting a message to a second electronic device, according to one example of the present invention.
FIG. 21 is a flowchart showing a process of a second electronic device of receiving a message from a first electronic device, according to one example of the present invention.
FIG. 22 is a block diagram showing a configuration of a computing device, according to one example.

### [MODE FOR INVENTION]

Hereinafter, specific embodiments of the present invention will be described with reference to drawings. The following detailed description is provided to help a comprehensive understanding of the method, device, and/or system described in the present description. However, these are only examples, and the present invention is not limited thereto.

In describing the example of the present invention, when it is judged that a detailed description of the prior art related to the present invention may unnecessarily obscure the gist of the present invention, the detailed description will be omitted. In addition, the terms described below are terms defined in consideration of functions in the present invention may vary depending on the intention or practice or the like of the user or operator. Therefore, the definition should be based on the contents throughout the present entire description. The terms used in the detailed description are intended to describe the examples of the present invention only, and should not be limited. Unless used otherwise clearly, singular expressions include meanings of plural expressions. In the present description, expressions such as "comprising" or "equipped" are intended to refer to certain features, numbers, steps, operations, elements, parts or combinations thereof, and they should not be construed to exclude the presence or possibility of one or more other features, numbers, steps, operations, elements, parts of combinations thereof, other than those described.

In addition, the terms including ordinal numbers such as 'the first,' or 'the second,' and the like can be used to describe various components, but the components should not be limited by the terms. The terms may be used for the purpose of distinguish one component from other components. For example, without departing from the scope of the present invention, the first component may be named the second component, and similarly, the second component may also be named the first component.

In addition, when a certain component is said to be "connected" to another component, this includes not only a case in which it is 'directly connected' but also a case in which it is 'connected with another component interposed therebetween.'

In the present description, "communication network" may include Internet, one or more local area networks, wide area networks, cellular networks, mobile networks, other types of networks, or a combination of these networks.

In the present description, "cryptographic protocol" may refer to a communication protocol that uses cryptographic technology to protect confidentiality and integrity of data transmitted and received between an electronic device and a server. Data is encrypted and transmitted so as not to be eavesdropped or altered during transmission, and the received encrypted data can be decrypted into original data and read. At this time, a function (or program) that encrypts or decrypts data may be referred to as a key. Cryptographic protocols may be broadly classified, depending on whether the keys used for encryption and decryption are identical, into a symmetric key (shared key) encryption method and an asymmetric key (public key) encryption method.

In the present description, "data" may refer to a set of electrical signals that are delivered through a communication network and have meaning. For example, the data may be a message transmitted from one electronic device to another electronic device. In addition, for example, the data may be a key transmitted between an electronic device and a server. The data may be encrypted or decrypted through the key. Furthermore, for example, the data may be a signature generated by a specific user entity.

In the present description, "session key" may refer to a key that is temporarily generated for communication based on a cryptographic protocol. The session key may be discarded when a preset time has elapsed or when a condition is reached. The session key may be newly generated in order to perform a novel operation. The session key may undergo additional processing in order to ensure communication stability or to be divided according to subsequent respective roles.

In an exemplary example, the additional processing may be inputting it into a random number function so as to have a preset bit length. The session key may be input to the random number function and may be changed to a bit length of the preset length. In another exemplary example, the additional processing may be inputting it into a range check function for checking whether a preset functional range is satisfied. The session key may be input to the range check function, and if the preset functional range is not satisfied, it may be discarded, and accordingly, a new session key may be generated.

The session key, by passing through the additional processing, may be subdivided into a message session key, a private session key, and a signature session key.

In an exemplary example, a message session key may be a key for encrypting or decrypting data in a symmetric key encryption method. The data to be encrypted or decrypted may be a transmitted or received message. The message session key may be generated by inputting a session key having a bit length of 640 into a random number function so as to have a bit length of 128.

In an exemplary example, a private session key may be a key used in an intermediate step for another preset purpose. For example, the preset other purpose may be a key agreement process (for example, Elliptic Curve Diffie-Hellman key exchange (ECDH)). In addition, the preset other purpose may be a process of decrypting an encrypted message session key. The private session key may be generated by inputting a session key having a bit length of 640 into a random number function so as to have a bit length of 256, and inputting it into a range check function to verify whether it is included in a range of an elliptic curve encryption function.

In an exemplary example, a signature session key may be a key used to generate a signature for a message. The signature session key may be generated by inputting a session key having a bit length of 640 into a random number function so as to have a bit length of 256, and inputting it into a range check function to verify whether it is included in a range of an elliptic curve encryption function.

The message session key, the private session key, and the signature session key may each be different session keys from one another. In addition, two or more of the message session key, the private session key, and the signature session key may be identical keys to each other.

In the present description, "symmetric key encryption method" may refer to a method in which encrypted data is decrypted with the same key as that used to encrypt the data. Then, the commonly used key may be referred to as a shared key. A shared key that is used only temporarily and once in one session may be referred to as a session key.

In the present description, "asymmetric key encryption method" may refer to a method in which encrypted data is decrypted with a key different from the key used to encrypt the data. Each electronic device may have a unique public key and a unique private key. The public key may be disclosed to all other than the electronic device holding it. On the other hand, the private key may not be exposed outside the electronic device. The private key and the public key possessed by one electronic device may operate as a pair, so that one key encrypts data and the other key may decrypt the encrypted data again.

In the present description, "private key" may refer to a key that an electronic device does not share with another electronic device. In an exemplary example, the private key may be used by an electronic device to generate a signature, to verify a certificate of another electronic device, or to encrypt or decrypt data transmitted to or received from another electronic device. The private key may not be shared with another electronic device, but may be shared with a server connected through a secure channel (a channel isolated from the outside and not attacked or hacked). In an exemplary example, the private key may decrypt a session key encrypted with a public key. Then, the private key may correspond to the public key that encrypted the session key.

In the present description, "standard private key" may refer to a private key that serves as a reference for determining whether a certificate received by an electronic device from a server has not been forged or tampered with. The standard private key may be a private key generated by inputting a random challenge signal to a PUF circuit of the electronic device.

In the present description, "reference private key" may refer to a private key used by a server to generate an authentication code included in a certificate transmitted to the electronic device.

In an exemplary example, the electronic device may receive a random challenge signal from a server. The electronic device may input the random challenge signal into a PUF circuit having the random challenge signal, and may generate a private key. The private key generated by the electronic device may be a standard private key. On the other hand, the server may search, from a challenge-response pair database previously stored for the electronic device, the same random challenge signal as the random challenge signal transmitted to the electronic device. The server may detect a private key corresponding to the random challenge signal from the challenge-response pair database. The private key detected by the server may be a reference private key.

The electronic device may receive, from the server, an authentication code generated based on the reference private key, and may generate an authentication code based on the standard private key. The electronic device may compare the generated authentication code with the received authentication code, to authenticate the certificate.

In the present description, "public key" may refer to a key that an electronic device can share with another electronic device. In an exemplary example, the public key may be used to verify a signature generated by a private key, to generate an authentication code for verifying a certificate, or to encrypt or decrypt data. The public key may be shared with another electronic device. Then, the channel connected with the other electronic device may be an insecure channel. In an exemplary example, the public key may encrypt a session key. The session key encrypted with the public key may be decrypted with a private key corresponding to the public key.

In the present description, "derived key" may refer to a key generated by encrypting a private key. The derived key may be exported outside in place of a private key that cannot be exported outside, or may be used to perform additional encryption operations.

In the present description, keys such as the "shared key," "session key," "public key," "private key," and "derived key" may be a function (or program) for encrypting or decrypting data. The key may be not only a means for encrypting and decrypting data but also data itself that is a subject of encryption and decryption.

In the present description, "shared session key" may refer to a key generated based on a private key and a public key. The shared session key may encrypt or decrypt a session key. A shared session key generated based on a private key may decrypt the session key. Likewise, a shared session key generated based on a public key may encrypt the session key. In other words, instead of encrypting or decrypting the session key directly with the private key and the public key, the session key may be encrypted or decrypted with the shared session key generated based on the private key and the public key.

In the present description, "certificate" may refer to data including a public key and an authentication code for verifying integrity (for example, whether the public key has been forged or tampered with) of the public key. The certificate may be generated by a trusted server. The certificate generated by the server may be delivered to an electronic device requesting a public key of a counterpart electronic device. The electronic device may verify the certificate to confirm integrity of the public key, and may use the public key in subsequent cryptographic protocols.

In the present description, "signature" may refer to an electronic signature that guarantees that specific data has been generated by a specific electronic device and has not been modified (not been forged or tampered with) thereafter. The signature may be generated by a private key of a specific electronic device. The signature may be transmitted, together with data to be communicated (for example, a message), to a counterpart electronic device communicating with the specific electronic device. (The message is merely an example, and a digital signature may be performed for other information as well.) In the counterpart electronic device, the signature may be verified based on a public key of the electronic device that transmitted the data. At this time, the public key may be a key of the electronic device transmitting the data, which corresponds to the private key.

In the present description, "Physical Unclonable Function (PUF)" may refer to a function implemented by hardware that cannot be cloned. At this time, since the hardware has different physical properties even if it is the same type of hardware that has undergone the same process, each of hardware may implement a different physical unclonable function. In other words, since each of hardware has unique physical properties, each of hardware may implement its own physical unclonable function. Accordingly, even when receiving the same input signal, each of hardware may output a different signal.

In addition, since once produced, the physical properties of the hardware does not change, one physical unclonable function may output a consistent signal each time even when receiving a specific signal multiple times. However, since the physical unclonable function is a function implemented by physical hardware rather than software, it may also be changed by an external environment.

On the other hand, due to the property of being unique, the physical unclonable function may be used as a means for an authentication system and the like. In this case, an input to the physical unclonable function may be referred to as a challenge signal, and an output may be referred to as a response signal. A challenge signal to be input and a corresponding response signal may be referred to as a challenge-response pair (CRP).

Meanwhile, in the present invention, the response signal may be used as the above-mentioned private key.

In the present description, "PUF (Physical Unclonable Function) circuit" may refer to hardware that implements a physical unclonable function. The PUF circuit may generate a response signal by receiving a challenge signal as an input. One PUF circuit may obtain the same output value (response signal) for the same input value (challenge signal). However, when the same input value (challenge signal) is input to a plurality of different PUF circuits, each PUF circuit may obtain a different output value (response signal). In other words, the response signal output by each PUF circuit in correspondence to the same challenge signal may be a unique value of each PUF circuit.

In the present description, "response information" may refer to information including one or more data generated based on a response signal. In the present invention, the electronic device (100) may generate one or more of a private key, helper data, a public key, and a derived key based on the response signal. Then, the response information may include one or more of the private key, the helper data, the public key, and the derived key. One response information may correspond to one response signal, and a plurality of response information may correspond to respective response signals. In other words, one challenge signal, one response signal, and one response information may correspond to one another.

In the present description, "Challenge-Response Pair (CRP) database" may refer to a database including a plurality of challenge-response pairs. Each challenge-response pair may include a challenge signal and a response signal corresponding to the challenge signal. The challenge-response pair database may be constructed in correspondence to a specific electronic device. In other words, a plurality of challenge-response pair databases may be constructed in correspondence to each of a plurality of respective electronic devices.

In an exemplary example, when an electronic device is authenticated by a server, the server may store the challenge-response pair database for the corresponding electronic device. The server may authenticate the electronic device based on the stored challenge-response pair database.

In the present description, "initial signal" may refer to a signal received by an electronic device from a server, in order to generate a plurality of challenge signals of a challenge-response pair database. The electronic device may generate the plurality of challenge signals from the initial signal.

In the present description, "challenge signal generation device" may refer to a device which outputs a challenge signal based on an initial signal as an input. Response information corresponding to a challenge signal may be generated through a PUF circuit. The challenge signal generation device may repeatedly generate challenge signals until a predetermined number of response information is obtained. In this case, the generated challenge signals may be different from one another. Unlike the PUF circuit, the challenge signal generation device may output different output values even when the same input value is obtained.

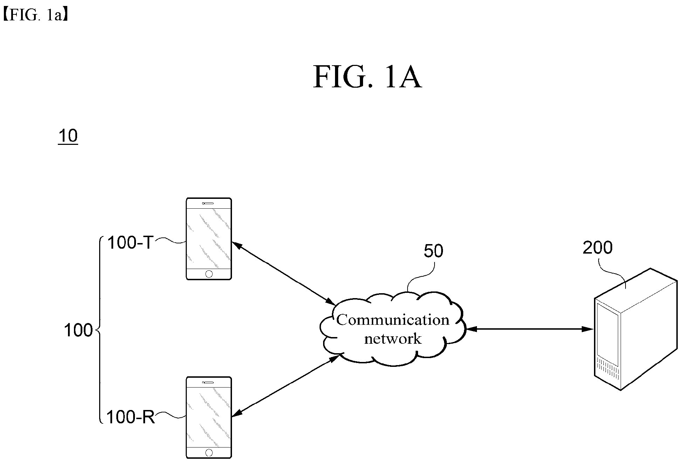

FIG. 1a is a schematic diagram showing a system for performing a PUF-based encrypted communication method, according to one example of the present invention.

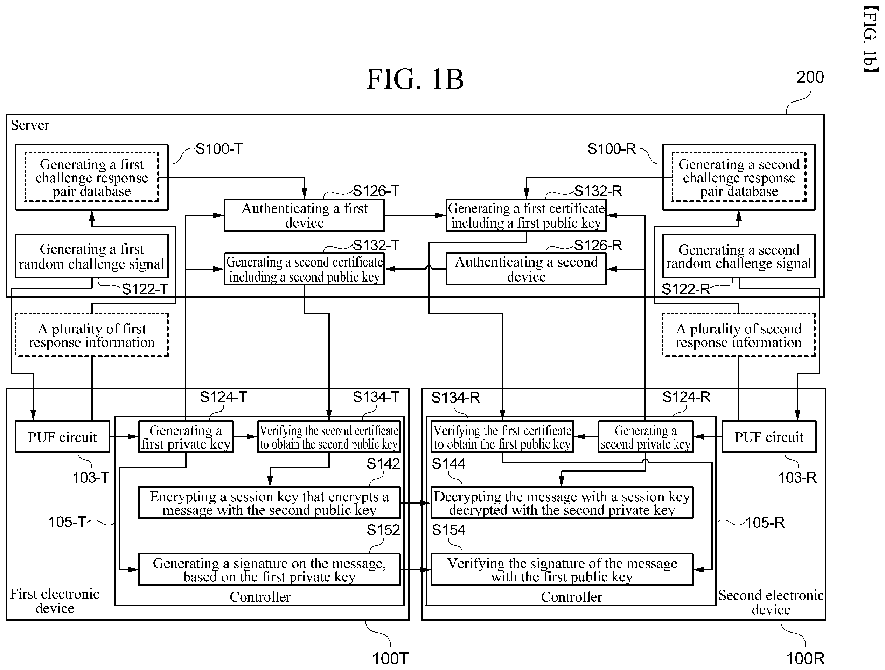

Referring to FIG. 1a, a system (10) performing a PUF-based encrypted communication method may comprise one or more electronic devices (100, 100-T, 100-R) and a server (200). The schematic diagram of the system performing the PUF-based encrypted communication method illustrated in FIG. 1 is one example of a configuration of the system (10), and the system (10) may be implemented with a greater number of components than the illustrated components, and the system (10) may be implemented with a smaller number of components.

The one or more electronic devices (100) and the server (200) may be connected so as to transmit and receive data through a communication network (50). The data transmitted and received, may include a message given or received between users, one or more kinds of keys for encrypting the message, a certificate delivering the keys and a signature ensuring integrity of data, and the like.

The electronic device (100) may be a device transmitting and receiving data. In an exemplary example, the electronic device (100) may be one or more of a first electronic device (100-T) transmitting data and a second electronic device (100-R) receiving the data.

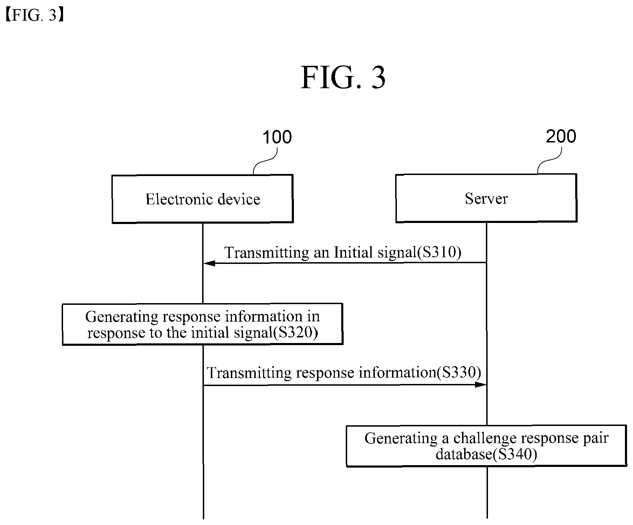

In an exemplary example, the electronic device (for example, 100-T) may be authenticated by the server (200), to transmit and receive data with another electronic device (100-R) and the server, or to obtain a key required for communication. The authentication, may be performed based on a challenge response pair database generated by a unique PUF (Physical Unclonable Function) circuit comprised in the electronic device (100). The challenge response pair database may be generated in the electronic device (100) and provided into the server (200). More specific description of a process by the electronic device (100) of providing the challenge response pair database to the server (200), and authenticating based on the provided challenge response pair database will be described later through FIG. 3 to FIG. 6 below.

In an exemplary example, the first electronic device (100-T) may be authenticated by the trusted server (200), in order to communicate with one or more of the second electronic device (100-R) and the server (200). Then, the authentication may confirm one or more of whether the first electronic device (100-T) is a trusted device (for example, whether it is not forged or tampered with or not stolen), and whether it has an access right to data to be accessed. In addition, the second electronic device (100-R) may be authenticated by the server (200) in the same manner.

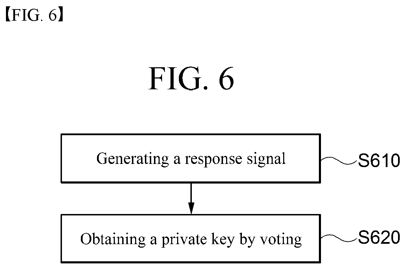

In an exemplary example, the electronic device (100) may generate a private key in the authentication process. At this time, the private key may be generated based on a PUF (Physical Unclonable Function) circuit comprised in the electronic device (100). More specific description of the process of generating the private key, will be described later in FIG. 6 which describes the configuration of the electronic device (100).

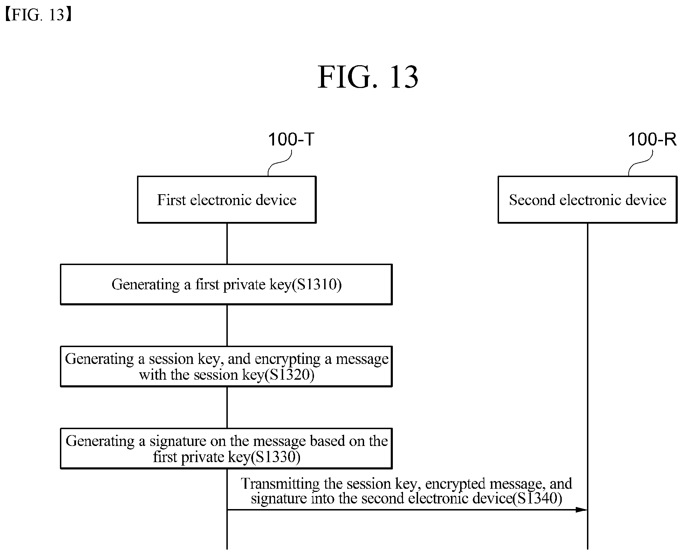

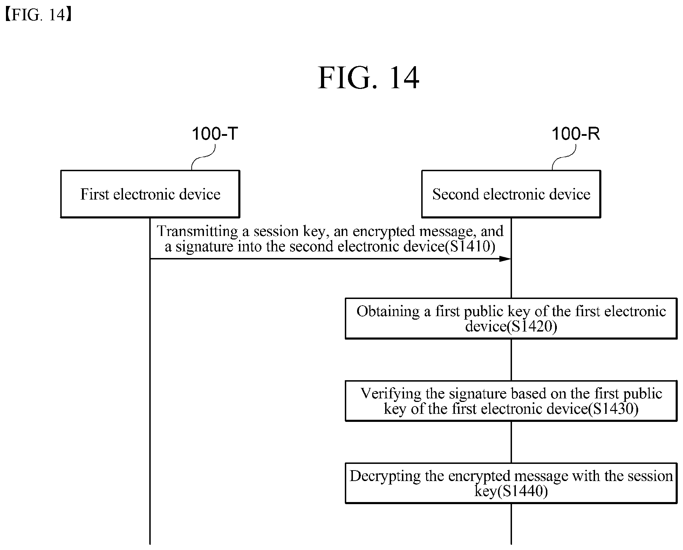

In an exemplary example, the first electronic device (100-T) may encrypt a session key to a private key. The session key may be a key which encrypts a message transmitted by the first electronic device (100-T) to the second electronic device (100-R). The first electronic device (100-T) may transmit the encrypted session key and the encrypted message to the second electronic device (100-R). The second electronic device (100-R) may receive the encrypted session key and encrypted message from the first electronic device (100-T). The second electronic device (100-R) may decrypt the session key with a public key of the first electronic device (100-T), and decrypt the message with the decrypted session key. More specific description of encryption and decryption of the message and session key, will be described later in FIG. 13 and FIG. 14 which describe transmitting and receiving the message.

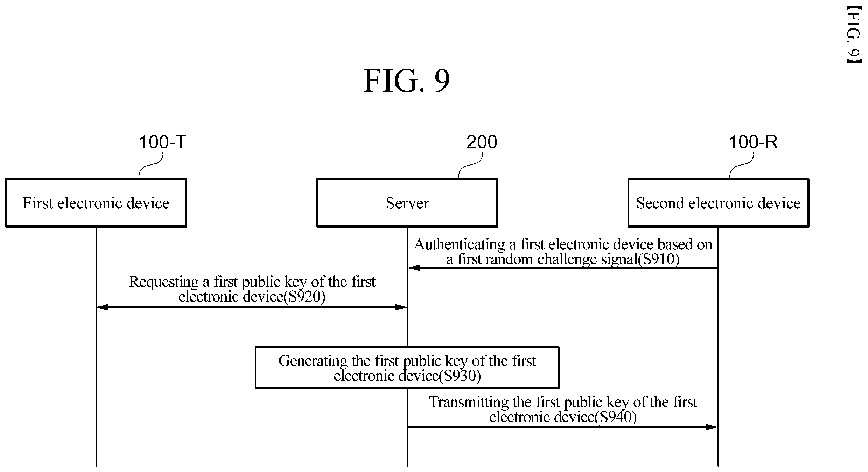

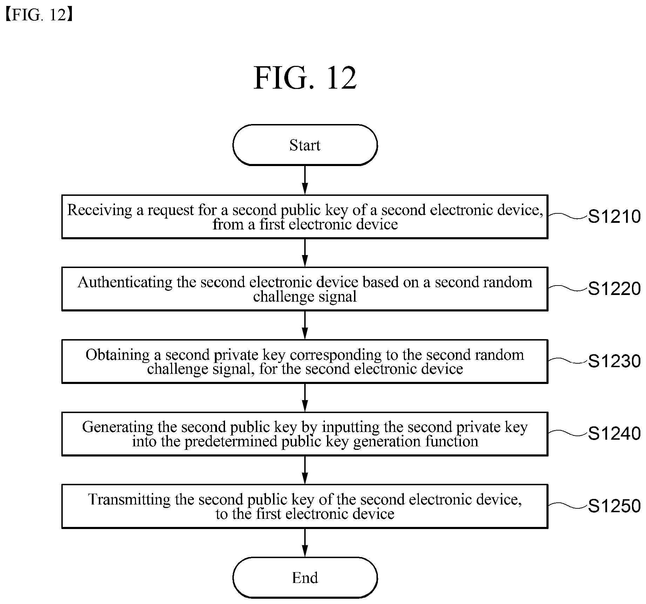

In an exemplary example, the first electronic device (100-T) may receive the public key of the second electronic device (100-R) from the server (200). Then, the public key of the second electronic device (100-R) may be generated based on the private key of the second electronic device (100-R). More specific description of the process of generating the public key, will be described later in FIG. 9 and FIG. 12 which describe the process of sharing the public key.

In addition, in the same manner, the second electronic device (100-R) may receive the public key of the first electronic device (100-T) from the server (200). Then, the public key of the first electronic device (100-T) may be generated based on the private key of the first electronic device (100-T). More specific description of the process of generating the public key, will be described later in FIG. 9 and FIG. 12 which describe the process of sharing the public key.

In an exemplary example, the first electronic device (100-T) may receive a second certificate of the second electronic device (100-R) from the server (200). The second certificate may comprise an authentication code for verifying integrity of the second certificate. The first electronic device (100-T) may verify the second certificate based on the authentication code. The first electronic device (100-T) may confirm the integrity of the second public key of the second electronic device (100-R), by verifying the second certificate of the second electronic device (100-R).

In an exemplary example, the first electronic device (100-T) may generate a signature on data (for example, a message) to be transmitted, and transmit the signature-generated data to the second electronic device (100-R). The signature-generated data may verify that the data has integrity without being forged or tampered with. The second electronic device (100-R) may confirm that data is not forged or tampered with, by verifying the signature generated on the received data. Signature generation may be performed in the first electronic device (100-T) which transmits data, and signature verification may be performed in the second electronic device (100-R) which receives the data. In addition, signature generation may be performed based on the private key of the first electronic device (100-T), and signature verification may be performed based on the public key of the first electronic device (100-T).

The server (200) may be connected with each of a plurality of electronic devices (100) through a communication network (50). The server may authenticate the electronic device (100). In addition, the server (200) may distribute one or more of the private key, public key and certificate to each of the electronic devices (100).

FIG. 1b is a diagram for describing a process of a PUF-based encrypted communication method, according to one example of the present invention.

Referring to FIG. 1b, the PUF-based encrypted communication method may comprise generating a challenge response pair database for one or more electronic devices (100) (S110), generating a random challenge signal transmitted by a server (200) to each electronic device (100) (S122), generating a private key by each electronic device (100) through a PUF circuit (103) (S124), authenticating each electronic device (100) by each private key (S126), generating a certificate comprising a public key corresponding to the private key for each electronic device (100) (S132), obtaining a public key of a counterpart electronic device by verifying a certificate of the counterpart electronic device by each electronic device (100) (S134), encrypting a session key which encrypts a message with a second public key of the second electronic device (100-R) from which the first electronic device (100-T) transmitting a message receives data (S142), decrypting the message with a session key decrypted with the second private key generated by the second electronic device (100-R) receiving the message (S144), generating a signature on the message based on the first private key generated by the first electronic device (100-T) (S152) and verifying the signature of the message with the first public key of the first electronic device (100-T) by the second electronic device (100-R) (S154).

In the step S110, a challenge response pair database may be generated through the PUF circuits (103-T, 103-R) of each electronic device (100-T, 100-R). The contents according to an exemplary example are as follows. The first electronic device (100-T) may receive an initial signal from the server (200). The first electronic device (100-T) may generate one or more challenge signals by inputting the received initial signal to a challenge signal generation device (102). Each of a plurality of challenge signals may be input into the PUF circuit (103-T).

The PUF circuit (103-T) may generate a response signal in correspondence to each of a plurality of challenge signals. A plurality of response information may be generated from a plurality of response signals corresponding to a plurality of challenge signals. The response signals and response information corresponding to the challenge signals may be designated as a challenge response pair, by forming a pair. The plurality of challenge response pairs may be transmitted to the server (200) and stored as a first challenge response pair database. More specific description for this will be described later through FIG. 3 to FIG. 6 below. In addition, in the same manner, for the second electronic device (100-R), a second challenge response pair database may be generated.

In the step S122, the server (200) may generate a random challenge signal to be transmitted to each electronic device (100). The contents according to an exemplary example are as follows. The server (200) may transmit a first random challenge signal to the first electronic device (100-T), by receiving an authentication request from the first electronic device (100-T). In addition, in the same manner, the server (200) may transmit a second random challenge signal to the second electronic device.

In the step S124, each electronic device (100) may generate a private key (response private key) through the PUF circuit (103). The contents according to an exemplary example are as follows. The first electronic device (100-T) may generate a first private key as the response private key by inputting the first random challenge signal to the PUF circuit (103-T). The first electronic device (100-T) may transmit the first private key to the server (200). In the same manner, the second electronic device (100-R) may also generate a second private key as the response private key by inputting the second random challenge signal to the PUF circuit (103-R) and transmit it to the server (200).

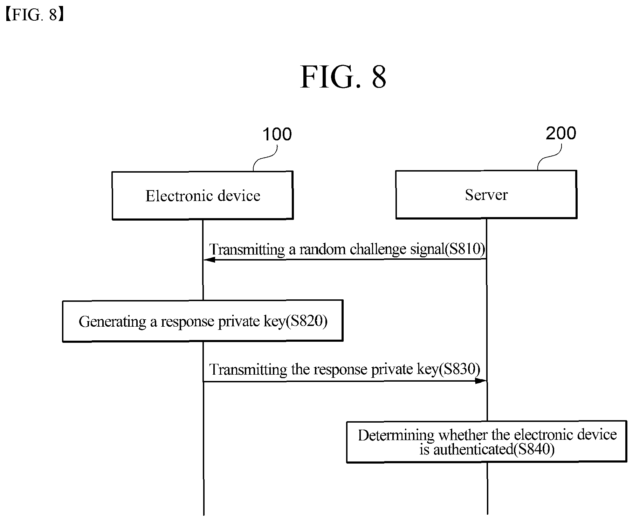

In the step S126, each electronic device (100) may be authenticated by each private key (response private key). The contents according to an exemplary example are as follows. The server (200) may retrieve the first private key corresponding to the first random challenge signal, from the first challenge response pair database. The server (200) may determine whether the first electronic device (100-T) is authenticated by comparing the retrieved first private key and the first private key received from the first electronic device (100-T). In the same manner, the server (200) may determine whether the second electronic device (100-R) is authenticated by comparing the second private key retrieved from the second challenge response pair database and the second private key received from the second electronic device (100-R). More specific description for this will be described later through FIG. 8 below.

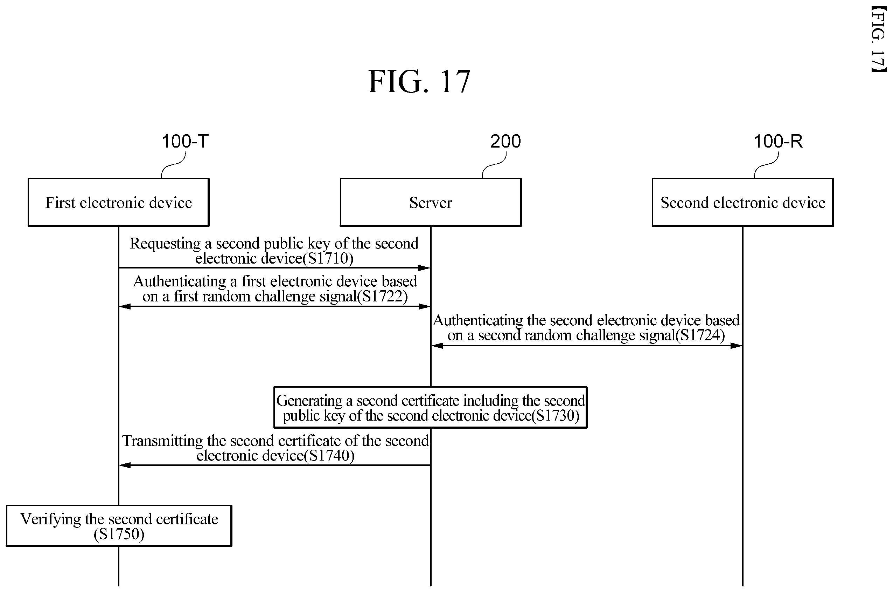

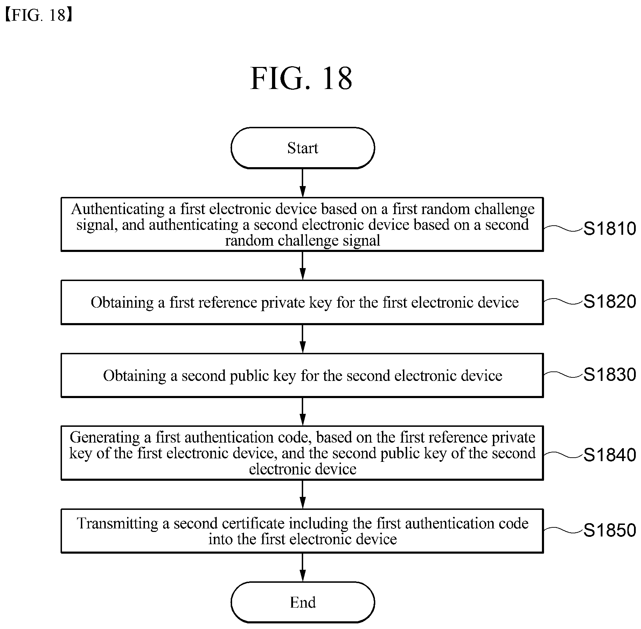

In the step S132, the server (200) may generate a certificate comprising a public key corresponding to a private key for each electronic device (100). The contents according to an exemplary example are as follows. The server (200) may generate a first public key corresponding to the first private key of the first electronic device (100-T), when the first electronic device (100-T) is authenticated. The server (200) may generate a first certificate comprising the first public key of the first electronic device (100-T), based on the public key of the first electronic device (100-T) and the private key of the second electronic device (100-R). The server (200) may transmit the first certificate comprising the first public key of the first electronic device (100-T) to the second electronic device (100-R). In the same manner, the server (200) may generate the second certificate comprising the second public key of the second electronic device (100-R) and transmit it into the first electronic device (100-T). More specific contents for this will be described later through FIG. 17 and FIG. 18 below.

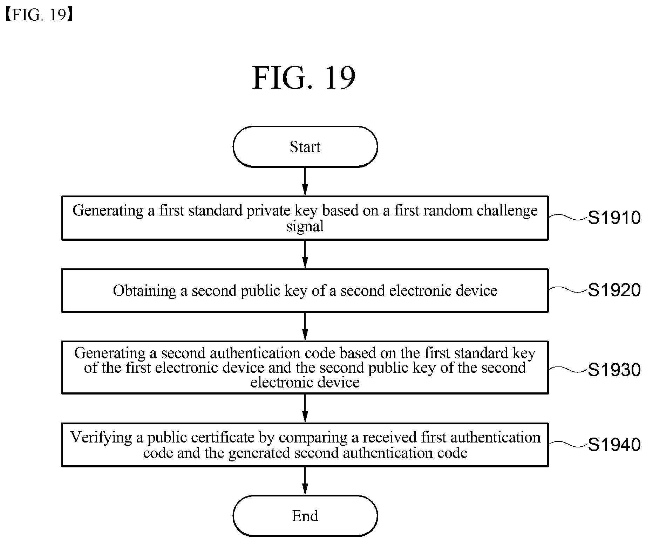

In the step S134, each electronic device (100-T, 100-R) may verify a certificate of a counterpart electronic device to obtain a public key of the counterpart electronic device (100-R, 100-T). The contents according to the exemplary example are as follows. The second certificate received by the first electronic device (100-T) may include a first authentication code generated based on the second public key and the first private key (reference private key) retrieved at the server (200). The first electronic device (100-T) may generate the first private key (standard private key) generated through the PUF circuit (103-T) and the second public key. The first electronic device (100-T) may verify the second certificate, by comparing the first authentication code generated at the server (200) and the second authentication code generated at the first electronic device (100-T). When the first authentication code and the second authentication code are identical, the first electronic device (100-T) may obtain the second public key comprised in the second certificate by determining that it can be trusted. In the same manner, the second electronic device (100-R) may also verify the first certificate to obtain the first public key. More specific contents for this will be described later through FIG. 19 below.

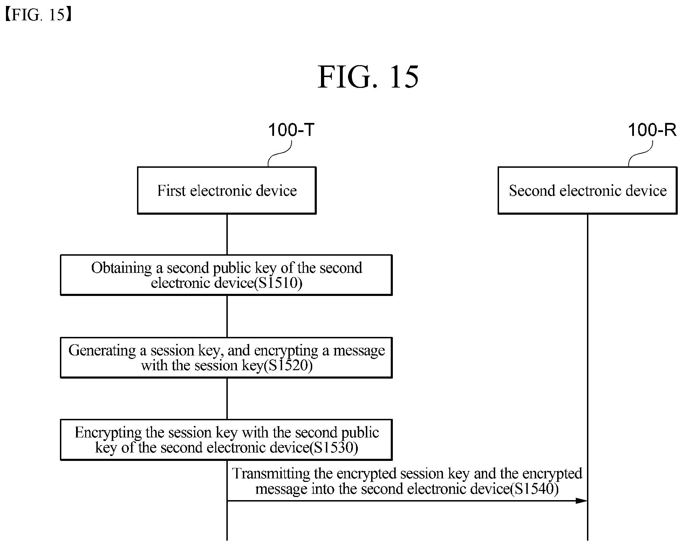

In the step S142, the first electronic device (100-T) transmitting a message may encrypt a session key encrypting the message with the second public key of the second electronic device (100-R) receiving data. The contents according to an exemplary example are as follows. The first electronic device (100-T) may generate a session key (for example, message session key) to encrypt a message to be transmitted to the second electronic device (100-R). The first electronic device (100-T) may encrypt a message with a message session key. The first electronic device (100-T) may encrypt the message session key with the second public key. The first electronic device (100-T) may transmit the encrypted message session key and the encrypted message to the second electronic device (100-R). More specific description for this will be described later through FIG. 15 below.

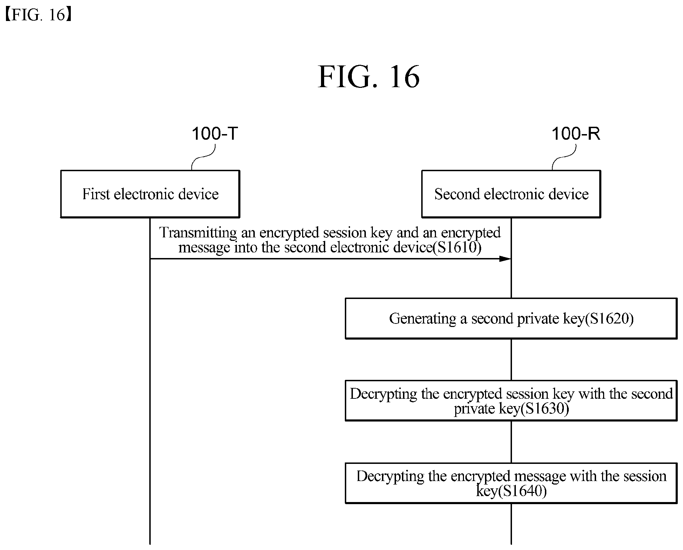

In the step S144, the second electronic device (100-R) receiving a message may decrypt a message with a session key (message session key) decrypted with the second private key. The contents according to an exemplary example are as follows. The second electronic device (100-R) may decrypt a message session key encrypted with the second private key to obtain the message session key. The second electronic device (100-R) may decrypt a message encrypted with the message session key. More specific description for this will be described later through FIG. 16 below.

In the step S152, the first electronic device (100-T) may generate a signature on a message based on the generated first private key. The contents according to an exemplary example are as follows. The first electronic device (100-T) may generate a random number that is not duplicated according to environmental conditions, and generates a signature session key based on the random number. The first electronic device (100-T) may generate a signature on a message based on the first private key and the signature session key. More specific description for this will be described later through FIG. 13 below.

In the step S154, the second electronic device (100-R) may verify the signature of the message with the first public key of the first electronic device (100-T). The contents according to an exemplary example are as follows. The second electronic device (100-R) may generate a signature based on the first public key of the first electronic device (100-T) and the signature session key. The second electronic device (100-R) may verify the signature, by comparing the generated signature and the signature received from the first electronic device (100-T). More specific description for this will be described later through FIG. 14 below.

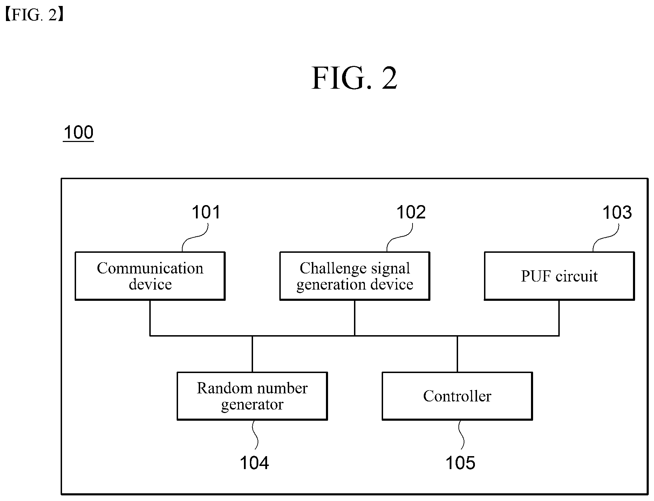

FIG. 2 is a block diagram showing the configuration of an electronic device that constructs a challenge response pair database and performs PUF-based cryptographic communication, according to one example of the present invention.

Referring to FIG. 2, the electronic device (100) may comprise a communication device (101), a challenge signal generation device (102), a PUF circuit (103), a random number generator (104) and a controller (105). The block diagram of the electronic device (100) illustrated in FIG. 2 is one example of constituting the electronic device (100), and the electronic device (100) may be implemented by a greater number of components than the illustrated components, and the electronic device (100) may be implemented also by a smaller number of components than them. The electronic device (100) may be a first electronic device (100-T) transmitting data, and may be a second electronic device (100-R) receiving data.

The electronic device (100) may not permanently store required data, and may temporarily generate it based on the PUF circuit (103) and delete it after use, in one or more of being authenticated at the server (200), transmitting and receiving data (For example, a message), generating and verifying a signature, and verifying integrity of a certificate.

The communication device (101) may transmit and receive data with another electronic device (100) and the server (200).

The contents according to an exemplary example are as follows. The communication device (101) may receive an initial signal from the server (200). The communication device (101) may deliver the initial signal to the challenge signal generation device (102). The challenge signal generation device (102) may generate one or more challenge signals, by obtaining the initial signal. Corresponding to each of one or more challenge signals, one or more response signals may be generated. Based on the one or more challenge signals and one or more response signals, a challenge response pair database may be generated. The communication device (101) may transmit one or more of the response signals and the challenge response pair database to the server (200).

The contents according to another exemplary example are as follows. The public key of the second electronic device (100-R) may be transmitted to the communication device (101) of the first electronic device (100-T) from the server (200). In addition, the communication device (101) of the first electronic device (100-T) may transmit an encrypted session key and an encrypted message to the second electronic device (100-R). Furthermore, in an exemplary example, the communication device (101) of the second electronic device (100-R) may also perform the same role.

The contents according to other exemplary example are as follows. The public key of the first electronic device (100-T) may be transmitted to the communication device (101) of the second electronic device (100-R) from the server (200). In addition, the communication device

(101) of the first electronic device (100-T) may transmit a session key, an encrypted message and a signature to the second electronic device (100-R). Furthermore, in an exemplary example, the communication device (101) of the second electronic device (100-R) may also perform the same role.

The contents according to other exemplary example are as follows. The second certificate of the second electronic device (100-R) may be transmitted to the communication device (101) of the first electronic device from the server (200). In addition, the communication device (101) of the first electronic device (100-T) may transmit a session key and an encrypted message to the second electronic device (100-R). Furthermore, in an exemplary example, the communication device (101) of the second electronic device (100-R) may also perform the same role.

The challenge signal generation device (102) may receive an initial signal received through the communication device (101) as an input. The challenge signal generation device (102) may output one or more randomly formed challenge signals as the initial signal is received. In addition, the challenge signal generation device (102) may generate a second challenge signal, when response information corresponding to the first challenge signal is generated.

The PUF (physical unclonable function) circuit (103) may be a circuit implementing a physically unclonable PUF function. A plurality of PUF circuits (103) may obtain different output values (response signals) from one another, for the same input value (challenge signal). In other words, the response signal may be a unique value only of the PUF circuit generating the response signal. However, one PUF circuit (103) may output same response signals multiple times, when the same challenge signals are received as an input multiple times.

The contents according to an exemplary example are as follows. The PUF circuit (103) may produce response signals corresponding to each of a plurality of challenge signals. The controller (105) may obtain a plurality of response signals, and generate authentication information including data required for authentication based on the response signals. A specific challenge signal, a corresponding response signal and corresponding authentication information may be designated as one challenge response pair. A plurality of challenge response pairs may be transmitted to the server (200). At the server (200), based on a plurality of challenge response pairs, a challenge response pair database may be generated. More specific description for generating a challenge response pair database by the electronic device (100) will be described later in FIG. 3 to FIG. 6 below.

The contents according to another exemplary example are as follows. The PUF (Physical Unclonable Function) circuit (103) may generate a private key using a random challenge signal as an input. The PUF circuit (103) may receive a random challenge signal (challenge) received from the server (200) through the communication device (101) as an input. The PUF circuit (103) may output a corresponding response signal according to input of the random challenge signal. The PUF circuit (103) may generate a private key based on the corresponding response signal.

Specifically, the electronic device (100) may input the same random challenge signal to the PUF circuit (103) multiple times, and obtain corresponding response signals according to each input multiple times. Then, since the PUF circuit (103) is a circuit which produces a corresponding response signal based on physical properties of the circuit itself, a different response signal may be produced depending on the surrounding environment at the moment the challenge signal is input. Accordingly, a plurality of corresponding response signals obtained by the PUF circuit (103) may be discrete values rather than one specific value.

The PUF circuit (103) may generate a private key by performing preset post-treatment to a plurality of corresponding response signals. In an exemplary example, the PUF circuit (103) may obtain a private key by voting a plurality of corresponding response signals. The electronic device (100) may designate a corresponding response signal to be a representative as a private key depending on the frequency of appearance of a plurality of corresponding response signals.

The random number generator (104) may generate an arbitrary number (random number). The contents according to an exemplary example are as follows. The random number generator (104) may be a true random number generator (105, TRNG). The true random number generator (104) may generate a random number from physical phenomena of hardware. The true random number generator (104) may use randomness of physical phenomena, not an algorithm, unlike a pseudo random number generator (PRNG). In an exemplary example, the physical phenomena may be phenomena such as electromagnetic thermal noise, noise of semiconductor devices (shot noise), radioactive decay reaction and a probabilistic response upon photon detection and the like.

Accordingly, even one identical random number generator (104) may generate a different random number every time whenever it generates a random number multiple times. The random number generator (104) may set the generated random number as a session key encrypting a message.

The controller (105) may control the communication device (101), PUF circuit (103), challenge signal generation device (102) and random number generator (105), and operate data obtained from the communication device (101), PUF circuit (103), challenge signal generation device (102) and random number generator (105).

FIG. 3 is a flowchart showing a process for constructing the PUF-based challenge response pair database according to one example of the present invention.

Referring to FIG. 3, the method for constructing a challenge response pair database (S300) may comprise transmitting an initial signal to the electronic device (100) by the server (200) (S310), generating response information in correspondence to the initial signal by the electronic device (100) (S320), transmitting response information to the server (200) by the electronic device (100) (S330) and generating a challenge response pair database by the server (200) (S340).

In the step S310, the server (200) may transmit an initial signal to the electronic device (100). In an exemplary example, the server (200) may transmit an initial signal to the electronic device (100) that intends to transmit and receive data or share one or more keys required for communication.

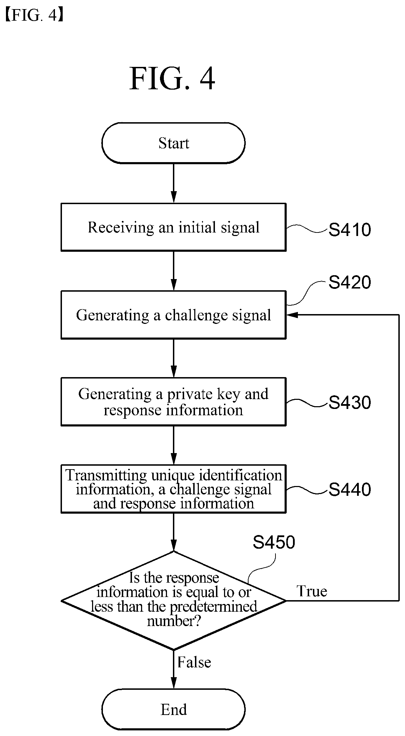

In the step S320, the electronic device (100) may generate response information in correspondence to the initial signal. In an exemplary example, the electronic device (100) may generate a plurality of challenge signals corresponding to the received initial signal, and generate response information corresponding to each challenge signal. Specific contents for generating a plurality of challenge signals and a plurality of corresponding response information by the electronic device (100) will be described later through FIG. 4 below.

In the step S330, the electronic device (100) may transmit response information to the server (200). Specifically, the electronic device (100) may transmit a plurality of generated challenge signals and a plurality of corresponding response information to the server. In the step S340, the sever (200) may generate a challenge response pair database. Specifically, the server (200) may generate a database by storing a plurality of challenge signals received from the electronic device (100), a plurality of corresponding response information, and unique identification information of the electronic device (100).

FIG. 4 is a flowchart for describing a method for generating a plurality of challenge signals and a plurality of corresponding response information by an electronic device, according to one example of the present invention. The method illustrated in FIG. 4 may be performed by the afore-mentioned electronic device (100). In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

In an exemplary example, data for constructing a challenge response pair database may be generated through the PUF circuit (103) in the electronic device (100) which requests authentication.

Referring to FIG. 4, the method for generating a plurality of challenge signals and a plurality of corresponding response information (S400) may comprise receiving an initial signal (S410), generating a challenge signal (S420), generating a private key and response information (S430), transmitting unique identification information, the challenge signal and response information (S430) and repeatedly performing the step S420 to the step S440 until the challenge signal and response information pair reach the predetermined number (S450).

In the step S410, the electronic device (100) may receive an initial signal. The contents according to an exemplary example are as follows. The communication device (101) in the electronic device (100) may receive the randomly generated signal from the server (200) as the initial signal. The communication device (101) may deliver the initial signal to the challenge signal generation device (102).

In the step S420, the electronic device (100) may generate a challenge signal. The contents according to an exemplary example are as follows. the electronic device (100) may input the initial signal into the challenge signal generation device (102). The electronic device (100) may obtain the challenge signal from the challenge signal generation device (102).

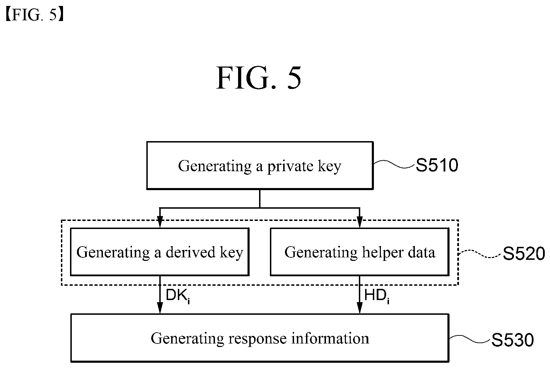

In the step S430, the electronic device (100) may generate a private key and response information. The contents according to an exemplary example are as follows. The electronic device may generate a private key corresponding to the challenge signal. The electronic device (100) may generate corresponding response information based on the generated private key. More specific contents for this will be described later through FIG. 5 below.

In the step S440, the electronic device (100) may transmit unique identification information, a challenge signal and response information to the server (200). The contents according to an exemplary example are as follows. The unique identification information may be unique information corresponding to a plurality of electronic devices (100) so as to distinguish the plurality of electronic devices (100) from each other. The challenge signal and response information may form a pair. The electronic device (100) may transmit the unique identification information and the pair of the plurality of challenge signals and response information to the server (200).

In the step S450, the electronic device (100) may repeatedly perform the step S420 to the step S440 until the challenge signal and response information pair becomes the predetermined number. The contents according to an exemplary example are as follows. The challenge signal generation device (102) may generate a first challenge signal according to receiving an initial signal. The electronic device (100) may generate response information corresponding to the first challenge signal through the above step S430, and transmit the first challenge signal and corresponding response information to the server.

As the electronic device (100) generates response information corresponding to the first challenge signal and transmits it to the server (200), the challenge signal generation device (102) may newly generate a second challenge signal. (At this time, the second challenge signal may be different from the first challenge signal.) In addition, the electronic device (100) may generate second response information corresponding to the second challenge signal and transmit it to the server (200). The electronic device (100) may generate a third challenge signal, by obtaining the second response information.

As above, the electronic device (100) may repeat challenge signal generation and generation of corresponding response information as above to obtain a plurality of pairs of the challenge signal and response information. The electronic device (100) may generate a new challenge signal until the pair of the challenge signal and response information reaches the predetermined number. In an exemplary example, the predetermined number may be 1.6 * 10⁸.

FIG. 5 is a flowchart for describing a method for generating response information, according to one example of the present invention.

In the step S510, the electronic device (100) may generate a private key. The contents according to an exemplary example are as follows. The private key may be a unique key corresponding to each of the plurality of electronic devices (100), which is a key to which other user cannot access. The electronic device (100) may input the generated challenge signal to the PUF circuit. The electronic device (100) may generate the private key by processing a signal output corresponding to the input challenge signal by the PUF circuit. More specific description for obtaining the private key by processing the output signal will be described by referring to FIG. 6 below.

In the step S520, the electronic device (100, for example, 100-T) may generate a derived key and helper data based on the private key. The contents according to an exemplary example are as follows. The derived key may be a key used for being transmitted to another electronic device (for example, 100-R) instead of the private key, or performing an additional encryption operation. The electronic device (100) may generate the derived key by inputting the private key to the predetermined derived function. The predetermined derived function may be a function that cannot predict an input signal corresponding to the output signal from the output signal. For example, the derived function may be a hash function. The hash function may be a function that outputs data in the predetermined fixed size by receiving data having any size as an input. In addition, the hash function may be a function which obtains different output data according to the input data.

The helper data may be data that corrects an error of the private key generated based on the PUF circuit. The helper data may be generated based on a plurality of response signals generated during the process of generating the private key. More specific contents for generation of the helper data, will be described later through FIG. 6 that describes generation of the private key.

In the step S530, the electronic device (100) may generate response information comprising one or more of the private key, derived key and helper data. In an exemplary example, the private key, derived key and helper data may be corresponding data generated based on one challenge signal.

FIG. 6 is a flowchart for describing a method for generating a private key, according to one example of the present invention. The method illustrated in FIG. 6, may be performed, for example, by the afore-mentioned electronic device (100). In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 6, the generating the private key (S510) may comprise generating a response signal (S610) and obtaining a private key by voting (S620).

In the step S610, the electronic device (100) may generate a response signal. The contents according to an exemplary example are as follows. The electronic device (100) may input one challenge signal (for example, a first challenge signal) to the PUF circuit (103). The electronic device (100) may obtain a response signal corresponding to the input challenge signal from the PUF circuit (103).

In an exemplary example, the electronic device (100) may input the identical challenge signal to the PUF circuit (103) multiple times, and may obtain response signals corresponding to each input. At this time, it is a circuit that produces the response signals based on physical properties of the PUF circuit (103) as the circuit itself, so a different response signal may be produced depending on the surrounding environment at the moment when the challenge signal is input. Accordingly, the plurality of response signals obtained by the electronic device (100) may be discrete values rather than one specific value.

In the step S620, the electronic device (100) may obtain a private key by voting a plurality of response signals. The contents according to an exemplary example are as follows. The electronic device (100) may perform predetermined post-treatment to the plurality of response signals to generate the private key. In an exemplary example, the electronic device (100) may determine a response signal to be a representative depending on the frequency of appearance of a plurality of corresponding response signals.

The electronic device (100) may determine a response signal with the highest frequency of appearance as the response signal to be a representative from the plurality of response signals. Otherwise, the electronic device (100) may calculate a mean of the plurality of response signals and determine it as the response signal to be a representative. Otherwise, the electronic device (100) may calculate a mean of only the values included in the predetermined distribution range from the mean, when the plurality of response signals follow a normal distribution, signals and determine it as the response signal to be a representative. The electronic device (100) may store the response signal may designate the response signal obtained as a representative as the private key.

The electronic device (100) may generate helper data based on a plurality of response signals corresponding to one challenge signal. The helper data may be data which corrects an error of the private key generated by the corresponding challenge signal. The electronic device (100) may compare the private key generated from the plurality of response signals and the plurality of response signals. The user device (100) may produce a difference between each of the plurality of response signals and the private key.

The electronic device (100) may generate helper data which can revise an error of the private key generated when a private key is newly generated, based on the plurality of differences produced. In an exemplary example, the electronic device (100) may generate helper data allowing to produce the mean, when a response signal that is not a mean is output from the PUF circuit (103), based on the distribution and mean of the response signal that form a normal distribution.

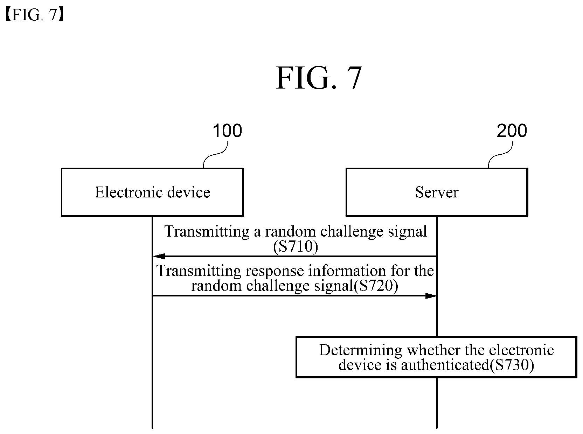

FIG. 7 is a flowchart showing a process of authenticating an electronic device, based on a constructed challenge response pair database, according to one example of the present invention.

In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 7, the method for authenticating the electronic device (100), may comprise transmitting a random challenge signal to the electronic device (100) to which authentication is requested by the server (200) (S710), transmitting corresponding response information generated by the electronic device (100) by inputting the random challenge signal into the PUF (Physically Unclonable Function) circuit of the electronic device (100) to the server (200) (S720) and determining the authentication of the electronic device (100), by comparing, by the server (200), the corresponding response information with a challenge response pair database (S730).

In the step S710, the server (200) may transmit a random challenge signal to the electronic device (100) which requests authentication. The contents according to an exemplary example are as follows. The server (200) may receive an authentication request from the electronic device (100) that is to be authenticated. The server (200) may generate the random challenge signal, by receiving the authentication request. The server (200) may receive the random challenge signal generated with the electronic device (100) which requests authentication.

In the step S720, the electronic device (100) may transmit response information generated in correspondence to the random challenge signal. The contents according to an exemplary example are as follows. The electronic device (100) may receive the random challenge signal through the communication device (101). The electronic device (100) may input the received random challenge signal to the PUF (physically unclonable function) circuit (103), to obtain a corresponding response signal as an output. The output response signal may correspond in a one-to-one manner to the input random challenge signal. A private key may be generated based on the response signal.

The electronic device (100) may generate response information about user authentication by processing the corresponding response signal. The method for generating corresponding response information by processing the corresponding response signal, is same as the afore-mentioned method for generating response information from the response signal in FIG. 5 and FIG. 6. The electronic device (100) may transmit the generated response information to the server (200). The response information may include the private key.

In the step S730, the authentication of the electronic device (100) may be determined. The contents according to an exemplary example are as follows. The server (200) may receive response information corresponding to the random challenge signal transmitted from the electronic device (100). The server (200) may determine the received response information based on the previously collected challenge response pair database. The previously collected challenge pair database may store the plurality of challenge signals input to the PUF circuit (103) of the electronic device (100) and the response information generated in correspondence to each of and the plurality of challenge signals as a plurality of pairs.

The server (200) may retrieve the random challenge signal transmitted to the electronic device (100) from the challenge response pair database and response information corresponding thereto. The server (200) may compare the response information received from the electronic device (100) and the response information retrieved from the challenge response pair database. The server (200) may approve the authentication request of the electronic device (100), when the received response information is identical to the retrieved response information. Otherwise, the server (200) may reject the authentication request of the electronic device (100), when the received response information is different from the retrieved response information.

FIG. 8 is a flowchart showing a process by a server of authenticating an electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 8, the method for authenticating the electronic device (100) by the server (200), may comprise transmitting a random challenge signal to the electronic device (100) by the server (200) (S810), generating a response private key by the electronic device (100) (S820), transmitting the response private key to the server (200) by the electronic device (100) (S830) and determining authentication of the electronic device (100) by the server (200).

In the step S810, the server (200) may transmit a random challenge signal to the electronic device (100). The contents according to an exemplary example are as follows. The server (200) may transmit a randomly generated challenge signal (hereinafter, random challenge signal) by the electronic device (100) which requests authentication. Specifically, the server (200) may receive an authentication request from the electronic device (100) that is to be authenticated. The server (200) may generate the random challenge signal, according to receive the authentication request. The server (200) may transmit the random challenge signal generated by the electronic device (100) which requests authentication.

In the S820, the electronic device (100) may generate a response private key. The contents according to an exemplary example are as follows. The electronic device (100) may receive a random challenge signal from the server (200). The electronic device (100) may input the received random challenge signal to the PUF (Physically Unclonable Function) circuit (103), to obtain a response signal as an output. The output response signal may correspond in a one-to-one manner to the input random challenge signal. The electronic device (100) may designate the output response signal as a response private key.

In the step S830, the electronic device (100) may transmit a response private key to the server (200). The contents according to an exemplary example are as follows. The electronic device (100) may transmit the response private key generated in correspondence to the random challenge signal to the server (200).

In the step S840, the server (200) may determine authentication of the electronic device (100). The contents according to an exemplary example are as follows. The server (200) may receive the response private key generated in correspondence to the random challenge signal transmitted from the electronic device (100). The server (200) may determine the received response private key based on the previously stored challenge response pair database. The previously stored challenge response pair database may be generated based on the PUF circuit (103) of the electronic device (100), through FIG. 3 to FIG. 6.

The challenge response pair database may include a plurality of challenge response pairs. The challenge response pairs may include a pair of a challenge signal and a private key based on the PUF circuit (103). The challenge signal may be a signal input to the PUF circuit (103). The private key may be a key generated based on the response signal output in correspondence to the challenge signal. At this time, the plurality of challenge response pairs may be different from each other.

The server (200) may retrieve a random challenge signal transmitted to the electronic device (100) and a response private key corresponding thereto from the challenge response pair database. The server (200) may compare the response private key received from the electronic device (100) and the response private key retrieved from the challenge response pair database. The server (200) may approve an authentication request of the electronic device (100), when the received response private key is identical to the retrieved response private key. Otherwise, the server (200) may reject an authentication request of the electronic device (100), when the received response private key is different from the retrieved response private key.

FIG. 9 is a flowchart showing a process by a server of sharing a first public key of a first electronic device with a second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 9, the method for sharing a public key between a plurality of electronic devices (100), may comprise requesting a first public key of a first electronic device (100-T) to the server (200) by a second electronic device (100-R) (S910), authenticating the first electronic device (100-T) based on a first random challenge signal by the server (200) (S920), generating a first public key of the first electronic device (100-T) by the server (200) (S930) and transmitting the first public key of the first electronic device (100-T) to a second electronic device (100-R) by the server (200) (S940).

In the step S910, the second electronic device (100-R) may request a first public key of a first electronic device (100-T) to the server (200). The contents according to an exemplary example are as follows. The second electronic device (100-R) may be a device to receive data (for example, a message) from the first electronic device (100-T). The second electronic device (100-R) may request the first public key of the first electronic device (100-T) to verify a signature generated on the data received from the first electronic device (100-T). In order to obtain the first public key of the first electronic device (100-T), the second electronic device (100-R) may request it to the server (200).

In the step S920, the server (200) may authenticate the first electronic device (100-T) based on the first random challenge signal. The contents according to an exemplary example are as follows. The server (200) may randomly generate a signal (hereinafter, the first random challenge signal), as the first public key of the first electronic device (100-T) is requested from the second electronic device (100-R). The server (200) may transmit the first random challenge signal to the first electronic device (100-T). The server (200) may receive a first private key corresponding to the first random challenge signal from the first electronic device (100-T). The server (200) may authenticate the first electronic device (100-T) based on the first random challenge signal and the first private key. Since specific contents for authenticating the first electronic device (100-T) by the server (200) are identical to the contents of authenticating the electronic device (100) in FIG. 8, they will be omitted.

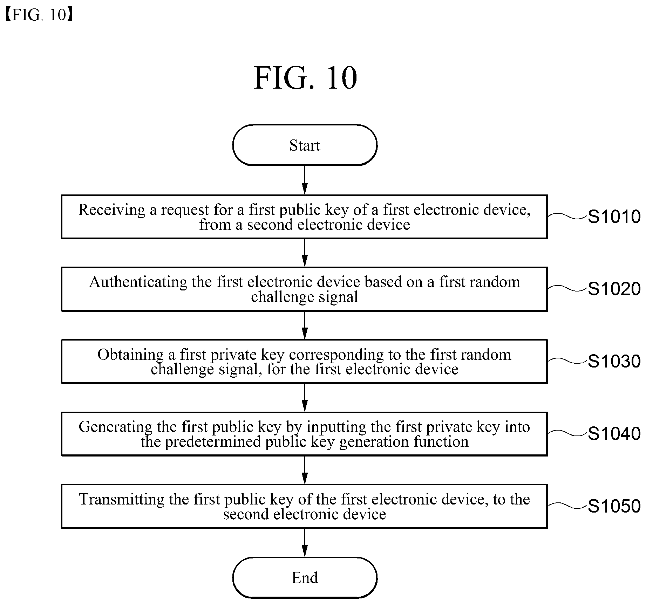

In the step S930, the server (200) the server (200) may generate a first public key of the first electronic device (100-T). The contents according to an exemplary example are as follows. The server (200) may obtain the first private key of the first electronic device (100-T) in the process of authenticating the first electronic device (100-T). At this time, the first private key obtained by the server (200) may be the response private key generated in correspondence to the first random challenge signal in the first electronic device (100-T). In addition, the first private key obtained by the server (200) may be a response private key retrieved in correspondence to the first random challenge signal from the first challenge response pair database stored by the server (200). The server (200) may generate the first public key based on the first private key. More specific description for this will be described later through FIG. 10 below.

In the S940, the server (200) may transmit the first public key of the first electronic device (100-T) to the second electronic device (100-R). The contents according to an exemplary example are as follows. The server (200) may transmit the first public key generated in the step S930, to the second electronic device (100-R) that requests the first public key of the first electronic device (100-T). In an exemplary example, the first public key may be transmitted to the second electronic device (100-R) by being included in a first certificate. The second electronic device (100-R) may verify the first certificate to obtain the first public key.

FIG. 10 is a flowchart showing an operation of a server, in which the server shares a first public key of a first electronic device with a second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 10, the method for sharing the first public key of the first electronic device (100-T) to second electronic device (100-R), may comprise requesting the first public key of the first electronic device (100-T) to the server (200) from the second electronic device (100-R) (S1010), authenticating the first electronic device (100-T) based on the first random challenge signal by the server (200) (S1020), obtaining the first private key corresponding to the first random challenge signal by the server (200) for the first electronic device (100-T) (S1030), inputting the first public key to the previously public key generation function to generate the first public key by the server (200) (S1040) and transmitting the first public key of the first electronic device (100-T) to the second electronic device (100-R) by the server (200) (S1050).

In the step S1010, the first public key of the first electronic device (100-T) may be requested to the server (200) from the second electronic device (100-R). The contents according to an exemplary example are as follows. The second electronic device (100-R) may be a device to receive data (for example, a message) from the first electronic device (100-T). The second electronic device (100-R) may request the first public key of the first electronic device (100-T) to verify a signature generated on data received from the first electronic device (100-T). The first public key of the first electronic device (100-T) may be requested to the server (200) from the second electronic device (100-R).

In the step S1020, the server (200) may authenticate the first electronic device (100-T) based on the first random challenge signal. Since detailed contents for authenticating the first electronic device (100-T) by the server (200) are identical to the contents of authenticating the electronic device (100) in FIG. 8, they will be omitted.

In the step S 1030, the server (200) may obtain the first private key corresponding to the first random challenge signal, for the first electronic device (100-T). The contents according to an exemplary example are as follows. The server (200) may obtain the first private key of the first electronic device (100-T) in the process of authenticating the first electronic device (100-T). At this time, the first private key obtained by the server (200) may be a response private key generated in correspondence to the first random challenge signal in the first electronic device (100-T). In addition, the first private key obtained by the server (200) may be a response private key retrieved in correspondence to the first random challenge signal from the first challenge response pair database stored by the server (200).

In the step S 1040, the server (200) may generate the first public key by inputting the first private key to the predetermined public key. The contents according to an exemplary example are as follows. The first public key of the first electronic device (100-T) (public key) may be a unique key corresponding to the first private key of the first electronic device (100-T). The first public key of the first electronic device (100-T) may be a key to which not only the second electronic device (100-R), but also electronic devices (100) of all other users can access. The predetermined public key generation function may be a function that cannot predict an input signal corresponding to an output signal from the output signal. In an exemplary example, the public key generation function may be an elliptic curve cryptography (ECC) function. The elliptic curve cryptography function may be a function including a quadratic equation in the form of an elliptic curve.

In the step S 1050, the server (200) may transmit the first public key of the first electronic device (100-T), to the second electronic device (100-R). The contents according to an exemplary example are as follows. The server (200) may transmit the first public key of the first electronic device (100-T) to the second electronic device (100-R) that requests the first public key of the first electronic device (100-T). At this time, the server (200) may generate the first certificate including the first public key, and transmit the first certificate to the second electronic device (100-R). The second electronic device (100-R) may verity the first certificate, and obtain the first public key included in the first certificate.

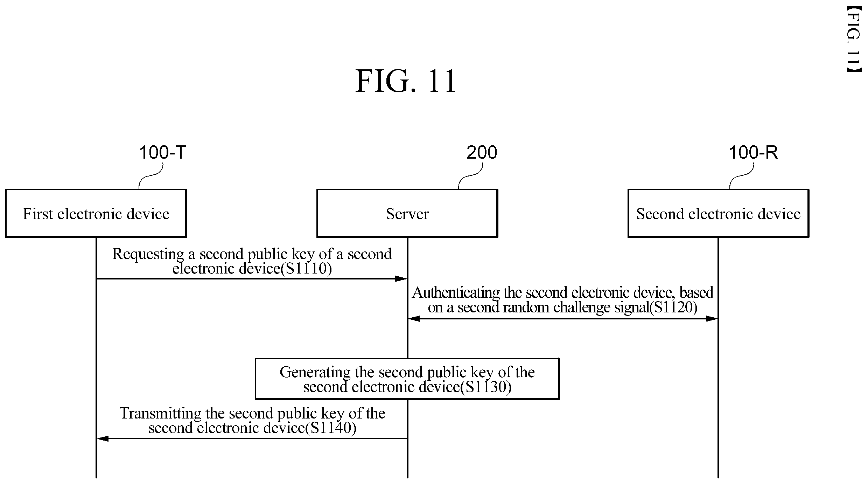

FIG. 11 is a flowchart showing a process by a server of sharing a second public key of a second electronic device with a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 11, the method of sharing a public key between a plurality of electronic devices (100), may comprise requesting the second public key of the second electronic device (100-R) to the server (200) by the first electronic device (100-T) (S1110), authenticating the second electronic device (100-R) based on the second random challenge signal by the server (200) (S1120), generating the second public key of the second electronic device (100-R) by the server (200) (S1130) and transmitting the second public key of the second electronic device (100-R) to the first electronic device (100-T) by the server (200) (S1140).

In the step S1110, the first electronic device (100-T) may request the second public key of the second electronic device (100-R) to the server (200). The contents according to an exemplary example are as follows. The first electronic device (100-T) may be a device to transmit data (for example, a message) to the second electronic device (100-R). The first electronic device (100-T) may request the second public key of the second electronic device (100-R) to encrypt data transmitted to the second electronic device (100-R). In order to obtain the second public key of the second electronic device (100-R), the first electronic device (100-T) may request it to the server (200).

In the step S1120, the server (200) may authenticate the second electronic device (100-R) based on the second random challenge signal. The contents according to an exemplary example are as follows. The server (200) may randomly generate a signal (hereinafter, second random challenge signal), upon receiving a request for the second public key of the second electronic device (100-R) from the first electronic device (100-T). The server (200) may transmit the second random challenge signal to the second electronic device (100-R). The server (200) may receive the second private key corresponding to the second random challenge signal from the second electronic device (100-R). The server (200) may authenticate the second electronic device (100-R) based on the second random challenge signal and the second private key. Since detailed contents of authenticating the second electronic device (100-R) by the server (200) are identical to authenticating the electronic device (100) in FIG. 8, they will be omitted.

In the step S1130, the server (200) may generate the second public key of the second electronic device (100-R). The contents according to an exemplary example are as follows. The server (200) may obtain the second private key of the second electronic device (100-R) in the process of authenticating the second electronic device (100-R). At this time, the second private key obtained by the server (200) may be a response private key generated in correspondence to the second random challenge signal in the second electronic device (100-R). In addition, the second private key obtained by the server (200) may be a response private key retrieved in correspondence to the second random challenge signal from the second challenge response pair database stored by the server (200). The server (200) may generate the second public key based on the second private key. More specific description for this will be described later through FIG. 12 below.

In the step S 1140, the server (200) may transmit the second public key of the second electronic device (100-R) to the first electronic device (100-T). The contents according to an exemplary example are as follows. The server (200) may transmit the second public key generated in the step S1130, to the first electronic device (100-T) that requests the second public key of the second electronic device (100-R). In an exemplary example, the second public key may be transmitted to the second electronic device (100-R) by being included in the second certificate. The second electronic device (100-R) may verity the second certificate to obtain the second public key.

FIG. 12 is a flowchart showing an operation of a server, in which the server shares a second public key of a second electronic device with a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 12, the method for sharing the second public key of the second electronic device (100-R) to the first electronic device (100-T) by the server (200), may comprise requesting the second public key of the second electronic device (100-R) to the server (200) by the first electronic device (100-T) (S1210), authenticating the second electronic device (100-R) based on the second random challenge signal by the server (200) (S1220), obtaining the second private key corresponding to the second random challenge signal by the server (200) for the second electronic device (100-R) (S1230), generating the second public key by inputting the second private key to the predetermined public key generation function by the server (200) (S1240), and transmitting the second public key of the second electronic device (100-R) to the first electronic device (100-T) by the server (200) (S1250).

In the step S1210, the second public key of the second electronic device (100-R) may be requested to the server (200) from the first electronic device (100-T). The contents according to an exemplary example are as follows. The first electronic device (100-T) may be a device to transmit data to the second electronic device (100-R). The first electronic device (100-T) may request the second public key of the second electronic device (100-R) to encrypt data transmitted to the second electronic device (100-R). The second public key of the second electronic device (100-R) may be requested to the server (200) from the first electronic device (100-T).

In the step S1220, the server (200) may authenticate the second electronic device (100-R) based on the second random challenge signal. Since detailed contents of authenticating the second electronic device (100-R) by the server (200) are identical to the contents of authenticating the electronic device (100) in FIG. 8, they will be omitted.

In the step S1230, the server (200) may obtain the second private key corresponding to the second random challenge signal, for the second electronic device (100-R). The contents according to an exemplary example are as follows. The server (200) may obtain the second private key of the second electronic device (100-R) in the process of authenticating the second electronic device (100-R). At this time, the second private key obtained by the server (200) may be a response private key generated in correspondence to the second random challenge signal in the second electronic device (100-R). In addition, the second private key obtained by the server (200) may be a response private key retrieved in correspondence to the second random challenge signal from the second challenge response pair database stored by the server (200).

In the step S1240, the server (200) may generate the second public key by inputting the second private key to the predetermined public key generation function. The contents according to an exemplary example are as follows. The second public key of the second electronic device (100-R) (public key) may be a unique key corresponding to the second private key of the second electronic device (100-R). The second public key of the second electronic device (100-R) may be a key to which not only the first electronic device (100-T), but also electronic devices (100) of all other users can access. The predetermined public key generation function may be a function that cannot predict an input signal corresponding to an output signal from the output signal. In an exemplary example, the public key generation function may be an elliptic curve cryptography (ECC) function. The elliptic curve cryptography function may be a function including a quadratic equation in the form of an elliptic curve.

In the step S1250, the server (200) may transmit the second public key of the second electronic device (100-R), to the first electronic device (100-T). The contents according to an exemplary example are as follows. The server (100) may transmit the second public key of the second electronic device (100-R) to the first electronic device (100-T) that requests the second public key of the second electronic device (100-R). At this time, the server (200) may generate the second certificate including the second public key, and transmit the second certificate to the first electronic device (100-T). The first electronic device (100-T) may verify the second certificate to obtain the second public key comprised in the second certificate.

FIG. 13 is a flowchart showing a process by a first electronic device of transmitting a message to a second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 13, the process of transmitting a message to the second electronic device (100-R) by the first electronic device (100-T), may comprise generating a first private key by the first electronic device (100-T) (S1310), generating a session key and encrypting a message with the session key by the first electronic device (100-T) (S 1320), generating a signature based on the first private key by the first electronic device (100-T) (S 1330) and transmitting the session key, encrypted message and signature to the second electronic device (100-R) by the first electronic device (100-T) (S1340).

In the step S1310, the first electronic device (100-T) may generate the first private key. The contents according to an exemplary example are as follows. The first electronic device (100-T) may perform an authentication request to the server (200) connected with a safe channel. The first electronic device (100-T) may receive the first random challenge signal in response to the authentication request from the server (200). The first electronic device (100-T) may input the first random challenge signal to the PUF circuit to obtain the first private key. Since more specific contents for this, are identical to the afore-mentioned contents through FIG. 2, FIG. 4 and FIG. 6, they will be omitted.

In the step S1320, the first electronic device (100-T) may generate a session key and encrypt a message with the session key. The contents according to an exemplary example are as follows. The first electronic device (100-T) may include a random number generator (104). The first electronic device (100-T) may generate the session key through the random number generator (104). Since more specific contents for generating the session key through the random number generator (104), are identical to the afore-mentioned contents through FIG. 2 below, they will be omitted. The first electronic device (100-T) may generate a message session key by inputting the generated session key to a random number function so that a session key having a bit length of 640 is to be a session key having a bit length of 128. Hereinafter, the session key used to encrypt the message may be a message session key. The first electronic device (100-T) may perform encryption a message with the session key.

In the step S1330, the first electronic device (100-T) may generate a signature based on the private kye. The contents according to an exemplary example are as follows. The first electronic device (100-T) may generate a signature by inputting the first private key generated in the step S1310 to the predetermined signature generation function. In addition, the first electronic device (100-T) may generate a session key additionally, and input the first private key and session key to the predetermined signature generation function to generate a signature. At this time, the session key used to generate a signature (hereinafter, signature session key), may be a session key different from the message session key. The signature session key may be generated by inputting a session key generated from a random number generator, to a random number function so that a session key having a bit length of 640 is to be a session key having a bit length of 256, and inputting it to a range check function to confirm whether it is included in the range of the elliptic curve cryptography function.

At this time, the predetermined signature generation function may be a function which shows an elliptic curve, and cannot predict an input signal corresponding to the output signal from the output signal. In an exemplary example, the predetermined signature generation function may be an elliptic curve digital signature algorithm (ECDSA).

On the other hand, the message session key may be a key generated to encrypt a message to be transmitted to the second electronic device (100-R). In an exemplary example, the first electronic device (100-T) may include the random number generator (104), and generate a message session key from the session key generated through the random number generator (104).

At this time, the generated signature may be delivered to the second electronic device (100-R) together with a message. The signature may be verified based on the first public key corresponding to the first private key in the second electronic device (100-R). More specific description for this will be described later through the step S1430 in FIG. 14 below.

In the step S 1340, the first electronic device (100-T) may transmit the session key, encrypted message and signature to the second electronic device (100-R). In an exemplary example, the signature generated on the message may be a signature generated in the step S1330. The encrypted message may be the message encrypted in the step S1320.

FIG. 14 is a flowchart showing a process by a second electronic device of receiving a message from a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 14, the process of receiving a message from the first electronic device (100-T) by the second electronic device (100-R), may comprise transmitting the session key, encrypted message and signature to the second electronic device (100-R) by the first electronic device (100-T) (S1410), obtaining the first public key of the first electronic device by the second electronic device (100-R) (S1420), verifying the signature based on the first public key of the first electronic device (100-T) by the second electronic device (100-R) (S1430) and decrypting the encrypted message with the session key by the second electronic device (100-R) (S1440).

In the step S1410, the first electronic device (100-T) may transmit the session key (for example, message session key), encrypted message and signature to the second electronic device (100-R). In an exemplary example, the signature generated on the message may be the signature generated through the step S1330 in the first electronic device (100-T). The encrypted message may be the message encrypted through the step S1320 in the first electronic device (100-T).

In the step S1420, the second electronic device (100-R) may obtain the first public key of the first electronic device (100-T). The contents according to an exemplary example are as follows. The second electronic device (100-R) may request the first public key of the first electronic device (100-T) to the server (200) connected with a safe channel. The server (200) may generate the first public key of the first electronic device (100-T), and transmit it to the second electronic device (100-R). Since more specific contents for this, are identical to the afore-mentioned contents through FIG. 9 and FIG. 10, they will be omitted.

In the step S1430, the second electronic device (100-R) may verity a signature based on the first public key of the first electronic device (100-T). The contents according to an exemplary example are as follows. The first electronic device (100-T) may generate a signature by inputting the first public key of the first electronic device (100-T) obtained in the step S1420 to the predetermined signature generation function. In addition, the second electronic device (100-R) may receive the session key additionally, and input the first public key and session key to the predetermined signature generation function to generate the signature.

At this time, the predetermined signature generation function may be a function which shows an elliptic curve, and cannot predict an input signal corresponding to the output signal from the output signal. In an exemplary example, the predetermined signature generation function may be an elliptic curve digital signature algorithm (ECDSA). At this time, the session key may be a key received to decrypt the received message from the first electronic device (100-T).

The second electronic device (100-R) may compare the signature generated based on the first public key of the first electronic device (100-T), and the signature received from the first electronic device (100-T). The second electronic device (100-R) may determine verification of the signature, according to whether the signature generated by itself and the received signature are identical. In an exemplary example, the second electronic device (100-R) may determine that the signature is verified, when the signature generated by itself and the received signature are identical. In addition, the second electronic device (100-R) may determine that the signature is not verified, when the signature generated by itself and the received signature are different.

In the steep S1440, the second electronic device (100-R) may perform decryption of the message encrypted with the session key. At this time, the session key may be a session key received from the first electronic device (100-T). The second electronic device (100-R) may provide a use with the decrypted message.

FIG. 15 is a flowchart showing a process by a first electronic device of transmitting a message to a second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 15, the process of transmitting a message to the second electronic device (100-R) by the first electronic device (100-T) may comprise obtaining the second public key of the second electronic device (100-R) by the first electronic device (100-T) (S1510), generating a session key and encrypting a message with the session key by the first electronic device (100-T) (S1520), encrypting the session key with the second public key of the second electronic device (100-R) by the first electronic device (100-T) (S1530), and transmitting the encrypted session key and the encrypted message to the second electronic device (100-R) by the first electronic device (100-T) (S1540).

In the step S1510, the first electronic device (100-T) may obtain the second public key of the second electronic device (100-R). The contents according to an exemplary example are as follows. The first electronic device (100-T) may request the second public key of the second electronic device (100-R) to the server (200) connected to a safe channel. The server (200) may generate the second public key of the second electronic device (100-R), and transmit it to the first electronic device (100-T). At this time, the second public key of the second electronic device (100-R) may correspond to the second private key of the second electronic device (100-R). The server (200) may authenticate the second electronic device (100-R) based on the second random challenge signal. The server (200) may store the previously stored second challenge response pair database for the second electronic device (100-R), for authentication of the second electronic device (100-R). The server (200) may obtain the second private key of the second electronic device (100-R) in the authentication process. At this time, the obtained second private key may be a response private key which is generated in the second electronic device (100-R) and transmitted to the server, and may be a response private key retrieved in correspondence to the second random challenge signal from the previously stored second challenge response pair database by the server (200). The server (200) may input the private key of the second electronic device (100-R) to the predetermined public key generation function to generate the public key of the second electronic device (100-R). Since more specific contents for this are identical to the afore-mentioned contents through FIG. 11 and FIG. 12, they will be omitted.

In the step S1520, the first electronic device (100-T) may generate a session key and encrypt a message with the session key. The contents according to an exemplary example are as follows. The first electronic device (100-T) may comprise a random number generator (104). For example, the random number generator (104) may be a true random number generator (105, TRNG). The first electronic device (100-T) may generate the session key through the random number generator (104).

The first electronic device (100-T) may input the generated session key to a random number function so that the session key having a bit length of 640 is to be a session key having a bit length of 128 to generate a message session key. Hereinafter, the session key used to encrypt the message may be a message session key.

The session key may be a key temporarily generated to encrypt the message by the first electronic device (100-T) transmitting a message. The session key may expire after the predetermined time. Otherwise, the session key may be temporarily generated, whenever the first electronic device (100-T) sends a message to the second electronic device (100-R), and expire once the transmission of the corresponding message is completed. After the session key expires, the first electronic device (100-T) may generate a novel session key to encrypt the message again.

More specific contents for generating the session key through the random number generator (104), will be described in the contents of describing the configuration of the electronic device (100) in FIG. 7 below together. The first electronic device (100-T) may perform encryption of the message with the session key.

In the step S1530, the first electronic device (100-T) may encrypt the session key with the second public key of the second electronic device (100-R). The contents according to an exemplary example are as follows. The first electronic device (100-T) may directly encrypt the session key with the second public key of the second electronic device (100-R).

Otherwise, the first electronic device (100-T) may generate a shared session key based on the second public key of the second electronic device (100-R), and encrypt the session key with the generated shared session key. Specifically, the first electronic device (100-T) may generate the shared session key based on the second public key of the second electronic device (100-R) and the session key. At this time, the session key used to generate the shared session key (hereinafter, private session key), may be a session key different from the message session key. The private session key may be generated by inputting the session key generated in the random number generator, to the random number function so that a session key having a bit length of 640 is to be a session key having a bit length of 256, and inputting it into a range check function to verify whether it is included in a range of an elliptic curve encryption function.

The first electronic device (100-T) may encrypt the session key with the shared session key. For example, the first electronic device (100-T) may share the session key with the second electronic device (100-R) through an Elliptic Curve Diffie-Hellman Key Exchange (ECDH) method.

In the S1540, the first electronic device (100-T) may transmit the encrypted session key and the encrypted message to the second electronic device (100-R). In an exemplary example, the encrypted session key may be the key generated in the step S1530. The encrypted message may be the message encrypted in the step S1520.

FIG. 16 is a flowchart showing a process by a second electronic device of receiving a message from a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 16, the process of receiving a message from the first electronic device (100-T) by the second electronic device (100-R), may comprise transmitting the encrypted session key and encrypted message to the second electronic device (100-R) by the first electronic device (100-T) (S1610), generating the second private key by the second electronic device (100-R) (S1620), decrypting the session key encrypted with the second private key by the second electronic device (100-R) (S1630), and decrypting the message encrypted with the session key by the second electronic device (100-R) (S1640).

In the step S1610, the first electronic device (100-T) may transmit the encrypted session key and encrypted message to the second electronic device (100-R). The contents according to an exemplary example are as follows. The encrypted session key may be the key generated through the step S1530 in the first electronic device (100-T). The encrypted message may be the encrypted message through the step S1520 in the first electronic device (100-T).

The session key may be a key used to encrypt and decrypt a message transmitted and received between the first electronic device (100-T) 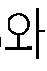 the second electronic device (100-R).

The session key may be encrypted by the second public key of the second electronic device (100-R) which transmits a message, and the encrypted session key may be decrypted by the second private key of the second electronic device (100-R). At this time, the second public key encrypting the session key and the second private key decrypting the session key may correspond to each other. In addition, the second public key may be generated based on the second private key. The process of generating the second private key decrypting the encrypted session key will be described in the step S1620 below.

In the step S1620, the second electronic device (100-R) may generate the second private key. The contents according to an exemplary example are as follows. The second electronic device (100-R) may request authentication to the server (200). The second electronic device (100-R) may generate the second private key in the authentication process. The second electronic device (100-R) to receive a message may receive an encrypted message. The second electronic device (100-R) may encrypt the encrypted message with a session key (for example, message session key). At this time, the session key may also be received from the first electronic device (100-T) together. At this time, the session key may be also received in an encrypted state. The encrypted session key may be encrypted by the second public key of the second electronic device (100-R). The second electronic device (100-R) may request the second private key corresponding to the second public key that encrypts the session key in order to decrypt the encrypted session key.

In the step S1630, the second electronic device (100-R) may decrypt the encrypted session key, with the second private key. The contents according to an exemplary example are as follows. The second electronic device (100-R) may directly decrypt the session key with the second private key.

Otherwise, the second electronic device (100-R) may generate a shared session key from the second private key, and decrypt a session key with the generated shared session key. Specifically, the second electronic device (100-R) may generate the shared session key based on the second private key and the received session key.

At this time, the received session key may be an encrypted session key. In addition, the session key used to generate the shared session key (hereinafter, private session key), may be a session key different from the message session key. The private session key may be generated by inputting the session key generated in the random number generator, to the random number function so that a session key having a bit length of 640 is to be a session key having a bit length of 256, and inputting it into a range check function to verify whether it is included in a range of an elliptic curve encryption function. The second electronic device (100-R) may decrypt the session key with the shared session key. At this time, the shared session key generated by the first electronic device (100-T) and the shared session key generated by the second electronic device (100-R) may be identical.

For example, the second electronic device (100-R) may share a session key from the first electronic device (100-T) through an Elliptic Curve Diffie-Hellman Key Exchange (ECDH) method.

In the step S1640, the second electronic device (100-R) may perform decryption of a message encrypted with the session key. At this time, the session key may be the session key decrypted in the step S1630. The second electronic device (100-R) may provide the decrypted message to a user.

FIG. 17 is a flowchart showing a process by a first electronic device of obtaining a public key of a second electronic device by verifying a second certificate of the second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 17, the method for sharing the public key between a plurality of electronic devices (100), may comprise requesting the second public key of the second electronic device (100-R) to the server (200) by the first electronic device (100-T) (S1710), authenticating the first electronic device (100-T) based on the first random challenge signal by the server (200) (S1722), authenticating the second electronic device (100-R) based on the second random challenge signal by the server (200) (S1724), generating a second certificate comprising the second public key of the second electronic device (100-R) by the server (200) (S1730), transmitting the second certificate of the second electronic device (100-R) to the first electronic device (100-T) by the server (200) (S1740), and verifying the second certificate by the first electronic device (100-T) (S1750).

In the step S1710, the first electronic device (100-T) may request the second public key of the second electronic device (100-R) to the server (200). The contents according to an exemplary example are as follows. The first electronic device (100-T) may be a device to transmit data (for example, a message) to the second electronic device (100-R). The first electronic device (100-T) may request the second public key of the second electronic device (100-R) to encrypt data to be transmitted to the second electronic device (100-R). The first electronic device (100-T) may request the second public key of the second electronic device (100-R) to the server (200) to obtain it.

In the step S1722, the server (200) may authenticate the first electronic device (100-T) based on the first random challenge signal. The contents according to an exemplary example are as follows. The server (200) may randomly generate a signal (hereinafter, the first random challenge signal), as the second public key of the second electronic device (100-R) is requested from the first electronic device (100-T). The server (200) may transmit the first challenge signal to the first electronic device (100-T). The server (200) may receive the first private key corresponding to the first random challenge signal from the first electronic device (100-T). The server (200) may authenticate the first electronic device (100-T) based on the first random challenge signal and the first private key. Since detailed contents of authenticating the first electronic device (100-T) by the server (200) are identical to authenticating the electronic device (100) in FIG. 8, they will be omitted.

In the step S1724, the server (200) may authenticate the second electronic device (100-R) based on the second random challenge signal. The contents according to an exemplary example are as follows. The server (200) may randomly generate a signal (hereinafter, the second random challenge signal), as the second public key of the second electronic device (100-R) is requested from the first electronic device (100-T). The server (200) may transmit the second random challenge signal to the second electronic device (100-R). The server (200) may receive the second private key corresponding to the second random challenge signal from the second electronic device (100-R). The server (200) may authenticate the second electronic device (100-R) based on the second random challenge signal and the second private key. Since detailed contents of authenticating the second electronic device (100-R) by the server (200) are identical to the contents of authenticating the electronic device (100) in FIG. 8, they will be omitted.

In the step S1730, the server (200) may generate a second certificate including the second public key of the second electronic device (100-R). The contents according to an exemplary example are as follows. The server (200) may obtain the first private key of the first electronic device (100-R) in the process of authenticating the first electronic device (100-T), and may obtain the second private key of the second electronic device (100-R) in the process of authenticating the second electronic device (100-R). At this time, the first private key and the second private key obtained by the server (200) may be a private key (standard private key) received from the first electronic device (100-T) and the second electronic device (100-R). In addition, the private key obtained by the server (200) may be a private key (reference private key) retrieved from the challenge response pair database stored by the server (200).

The server (200) may generate the second public key of the second electronic device (100-R) based on the second private key of the second electronic device (100-R). The server (200) may generate the second certificate of the second electronic device (100-R) including the second public key, based on the second private key and the second public key of the second electronic device (100-R). More specific description for this will be described later in FIG. 18 below.

In the step S1740, the server (200) may transmit the second certificate of the second electronic device (100-R) to the first electronic device (100-T) by the server (200). The contents according to an exemplary example are as follows. The server (200) may transmit the second certificate generated in the step S1730, to the first electronic device (100-T) that requests the second public key of the second electronic device (100-R).

In the step S1750, the first electronic device (100-T) may verify the second certificate. The contents according to an exemplary example are as follows. The first electronic device (100-T) may receive the second certificate including the second public key of the second electronic device (100-R) from the server (200). The second certificate may be verified based on the first private key(the first standard private key, the first reference private key) of the first electronic device (100-T) itself and the second public key of the second electronic device (100-R) included in the second certificate. When the verification of the second certificate is successful, the first electronic device (100-T) may determine that the second public key included in the second certificate is not forged or tampered with and obtain it, and use it for subsequent cryptographic protocols. More specific description for this will be described later through FIG. 19 below.

FIG. 18 is a flowchart showing a process by a server of sharing a second certificate including a public key of a second electronic device with a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 18, the method for sharing the second public key of the second electronic device (100-R) to the first electronic device (100-T) by the server (200) may comprise authenticating the first electronic device (100-T) based on the first random challenge signal and authenticating the second electronic device (100-R) based on the second random challenge signal by the server (200) (S1810), obtaining the first private key for the first electronic device (100-T) by the server (200) (S1820), obtaining the second public key for the second electronic device (100-R) by the server (200) (S1830), generating a first authentication code, based on the first private key of the first electronic device (100-T) and the second public key of the second electronic device (100-R) by the server (200) (S1840) and transmitting a second certificate including the first authentication code to the first electronic device (100-T) by the server (200) (S1850).

In the step S1810, the server (200) may authenticate the first electronic device (100-T) based on the first random challenge signal, and authenticate the second electronic device (100-R) based on the second random challenge signal. Since the process of authenticating each electronic device (100) by the server (200) is identical to the afore-mentioned contents in FIG. 8, it will be omitted.

In the step S1820, the server (200) may obtain the first private key for the first electronic device (100-T). The contents according to an exemplary example are as follows. The server (200) may obtain the first private key of the first electronic device (100-T) in the process of authenticating the first electronic device (100-T). At this time, the first private key obtained by the server (200) may be the private key received from the first electronic device (100-T) (the first standard private key). In addition, the private key obtained by the server (200) may be the private key retrieved from the first challenge response pair database stored by the server (200) for the first electronic device (100-T) (the first reference private key).

In the step S1830, the server (200) may obtain the second public key for the second electronic device (100-R). The contents according to an exemplary example are as follows. The server (200) may obtain the second private key of the second electronic device (100-R) in the process of authenticating the second electronic device (100-R). At this time, the second private key obtained by the server (200) may be the private key received from the second electronic device (100-R) (the second standard private key). In addition, the second private key obtained by the server (200) may be the private key retrieved from the second challenge response pair database stored by the server (200) for the second electronic device (100-R) (the second reference private key). More specific description for this is identical to the afore-mentioned description of FIG. 2.

The server (200) may generate the second public key of the second electronic device (100-R) based on the second private key. The contents according to an exemplary example are as follows. The server (200) may input the second private key to the predetermined public key generation function to generate the second public key. At this time, the second public key of the second electronic device (100-R) may be a unique key corresponding to the second private key of the second electronic device (100-R).

The second public key of the second electronic device (100-R) may be a key to which not only the first electronic device (100-T), but also electronic devices (100) of all other users can access. The predetermined public key generation function may be a function that cannot predict an input signal corresponding to an output signal from the output signal. In an exemplary example, the public key generation function may be an Elliptic Curve Cryptography (ECC) function.

In the step S1840, the server (200) may generate a first authentication code, based on the first private key of the first electronic device (100-T) and the second public key of the second electronic device (100-R). The contents according to an exemplary example are as follows. The server (200) may obtain and store a plurality of device information of each of a plurality of electronic devices (100-T, 100-R), for each of a plurality of electronic devices (100-T, 100-R). At least one information included in the plurality of device information may be one or more of values, data, and information that are generated based on the PUF circuit comprised in each of the plurality of electronic device (100-T, 100-R). For example, the plurality of device information may comprise a public key of the corresponding electronic device (100-T, 100-R).

The server (200) may input the first private key and the second public key to the predetermined authentication code generation function to output the first authentication code. The predetermined authentication code generation function may be a function that cannot predict an input signal corresponding to an output signal from the output signal.

In an exemplary example, the authentication code generation function may be a Hash-based Message Authentication Code (HMAC) function. The hash-based message authentication code function may be a function that applies the hash function multiple times. At this time, the hash function may be a function that produces output data having a fixed length regardless of the length of input data.

In the step S1850, the server (200) may transmit a second certificate including the first authentication code to the first electronic device (100-T). The contents according to an exemplary example are as follows. The server (200) may generate the second certificate including the second public key for the second electronic device (100-R) and the first authentication code. The server (200) may transmit the generated second certificate to the first electronic device (100-T) that requests the second public key of the second electronic device (100-R).

FIG. 19 is a flowchart showing a process by a first electronic device of obtaining a public key of a second electronic device by verifying a second certificate of the second electronic device received from a server, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 19, the method for verifying the second certificate of the second electronic device (100-R) received from the server (200) by the first electronic device (100-T), may comprise generating a private key based on the first random challenge signal by the first electronic device (100-T) (the first standard private key) (S1910), obtaining the second public key of the second electronic device (100-R) by the first electronic device (100-T) (S 1920), generating a second authentication code, based on the first private key of the first electronic device (100-T) (the first standard private key) and the second public key of the second electronic device (100-R) by the first electronic device (100-T) (S 1930) and verifying the certificate by comparing the first authentication code received by the first electronic device (100-T) and the generated second authentication code (S1940).

In the step S1910, the first electronic device (100-T) may generate a private key (the first standard private key) based on the first random challenge signal. The contents according to an exemplary example are as follows. The first electronic device (100-T) may request the second public key of the second electronic device (100-R) to the server. According to the request for the second public key, the first electronic device (100-T) may be authenticated by the first random challenge signal from the server. The first electronic device (100-T) may input the first random challenge signal received from the server to the PUF circuit (103) in the authentication process to obtain the first private key (the first standard private key).

In the step S1920, the first electronic device (100-T) may obtain the second public key of the second electronic device (100-R). The contents according to an exemplary example are as follows. The first electronic device (100-T) may receive the second certificate of the second electronic device (100-R) from the server (200). The second certificate may comprise the second public key of the second electronic device (100-R) and the first authentication code. The first electronic device (100-T) may obtain the public key included in the second certificate, as it obtains the second certificate.

In the step S1930, the first electronic device (100-T) may generate the second authentication code, based on the first private key of the first electronic device (100-T) (the first standard private key) and the second public key of the second electronic device (100-R). The contents according to an exemplary example are as follows. The first private key (the first standard private key) may be the key generated in the step S1910. In addition, the second public key may be the key obtained in the step S1920.

The first electronic device (100-T) may input the first private key and the second public key to the predetermined authentication code generation function to output the second authentication code. Since more specific description for the authentication code generation function is identical to the description in the step S1840 of FIG. 18, it will be omitted.

In the step S1940, the first electronic device (100-T) may verify a certificate, by comparing the received first authentication code and the generated second authentication code. The contents according to an exemplary example are as follows. As afore-mentioned in the description of the step S1920 of FIG. 19, the second certificate received from the server (200) by the first electronic device (100-T) may include the first authentication code. In addition, as afore-mentioned in the description of the step S1930 of FIG. 19, the first electronic device (100-T) may generate the second authentication code. The first electronic device (100-T) may verify the certificate based on the first authentication code comprised in the second certificate received from the server (200) and the second authentication code generated by itself.

Specifically, the first electronic device (100-T) may compare the received first authentication code and the generated second authentication code. When the received authentication code and the generated second authentication code are identical, it may be determined that the first electronic device (100-T) verifies the second certificate. When the received authentication code and the generated second authentication code are different, it may be determined that the first electronic device (100-T) does not verify the second certificate. When it is determined that the second certificate is verified, the first electronic device (100-T) may regard the second public key of the second electronic device (100-R) included in the second certificate as not being forged or tampered with, so it may be used for subsequent cryptographic protocols.

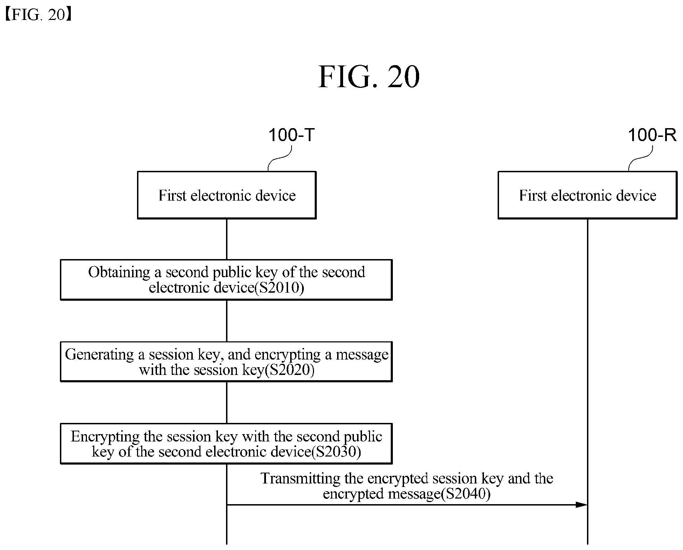

FIG. 20 is a flowchart showing a process of a first electronic device of transmitting a message to a second electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 20, the process of transmitting a message to the second electronic device (100-R) by the first electronic device (100-T), may comprise obtaining the second public key of the second electronic device (100-R) by the first electronic device (100-T) (S2010), generating a session key and encrypting the message with the session key by the first electronic device (100-T) (S2020), encrypting the session key with the second public key of the second electronic device (100-R) by the first electronic device (100-T) (S2030) and transmitting the encrypted session key and the encrypted message to the second electronic device (100-R) by the first electronic device (100-T) (S2040).

In the step S2010, the first electronic device (100-T) may obtain the second public key of the second electronic device (100-R). The contents according to an exemplary example are as follows. The first electronic device (100-T) may request the second public key of the second electronic device (100-R) to the server (200) connected with a safe channel. The server (200) may generate a certificate including the second public key of the second electronic device (100-R), and transmit it to the first electronic device (100-T). The first electronic device (100-T) may verify the second certificate to confirm integrity of the second public key included in the second certificate.

In the step S2020, the first electronic device (100-T) may generate a session key and encrypt a message with the session key. The contents according to an exemplary example are as follows. The first electronic device (100-T) may comprise a random number generator (104). The first electronic device (100-T) may generate the session key through the random number generator (104). Since more specific contents for generating the session key through the random number generator (104) are identical to the description of the configuration of the electronic device (100) in FIG. 2, they will be omitted. The first electronic device (100-T) may generate a message session key by inputting the generated session key, to a random number function so that a session key having a bit length of 640 is to have a bit length of 128. Hereinafter, the session key used to encrypt a message may be a message session key. The first electronic device (100-T) may perform encryption of a message with the session key.

In the step S2030, the first electronic device (100-T) may encrypt the session key with the second public key of the second electronic device (100-R). The contents according to an exemplary example are as follows. The first electronic device (100-T) may directly encrypt the session key with the second public key of the second electronic device (100-R).

Otherwise, the first electronic device (100-T) may generate a shared session key based on the second public key of the second electronic device (100-R), and encrypt the session key with the generated shared session key. Specifically, the first electronic device (100-T) may generate the shared session key based on the second public key of the second electronic device (100-R) and the session key. At this time, the session key used to generate the shared session key (hereinafter, private session key), may be a session key different from the message session key. The private session key may be generated by inputting the session key generated in the random number generator, to the random number function so that a session key having a bit length of 640 is to be a session key having a bit length of 256, and inputting it into a range check function to verify whether it is included in a range of an elliptic curve encryption function.

The first electronic device (100-T) may encrypt the session key with the shared session key. For example, the first electronic device (100-T) may share the session key with the second electronic device (100-R) through an Elliptic Curve Diffie-Hellman Key Exchange (ECDH) method.

In the step S2040, the first electronic device (100-T) may transmit the encrypted session key and encrypted message to the second electronic device (100-R). In an exemplary example, the encrypted session key may be the key generated in the step S2030. The encrypted message may be the message encrypted in the step S2020.

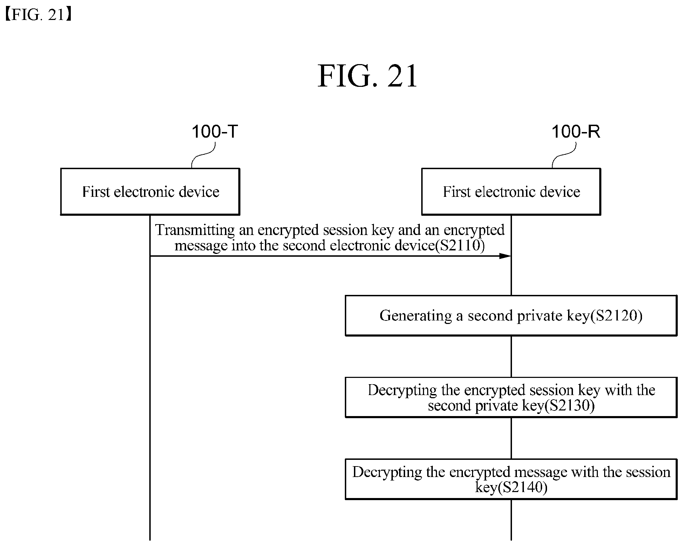

FIG. 21 is a flowchart showing a process of a second electronic device of receiving a message from a first electronic device, according to one example of the present invention. In the illustrated flowchart, the method is described by dividing into a plurality of steps, but at least some steps may be performed by changing the order, performed by combining with another step together, omitted, performed by dividing into sub-steps, or performed by adding one or more steps that are not illustrated.

Referring to FIG. 21, the process of receiving a message from the first electronic device (100-T) by the second electronic device (100-R), may comprise transmitting the encrypted session key and encrypted message to the second electronic device (100-R) by the first electronic device (100-T) (S2110), generating the second private key by the second electronic device (100-R) (S2120), decrypting the encrypted session key with the second private key by the second electronic device (100-R) (S2130) and decrypting the encrypted message with the session key by the second electronic device (100-R) (S2140).

In the step S2110, the first electronic device (100-T) may transmit the encrypted session key and encrypted message to the second electronic device (100-R). In an exemplary example, the encrypted session key may be the key encrypted through the step S2030 in the first electronic device (100-T). The encrypted message may be the encrypted message through the step S2020 in the first electronic device (100-T).

In the step S2120, the second electronic device (100-R) may generate the second private key. The contents according to an exemplary example are as follows. The second electronic device (100-R) may request authentication to the server (200). The second electronic device (100-R) may generate the second private key in the authentication process.

In the step S2130, the second electronic device (100-R) may decrypt the session key encrypted with the second private key. The contents according to an exemplary example are as follows. The second electronic device (100-R) may directly decrypt the session key with the second private key.

Otherwise, the second electronic device (100-R) may generate a shared session key from the second private key, and decrypt the session key with the generated shared session key. Specifically, the second electronic device (100-R) may generate the shared session key based on the second private key and the received session key.

At this time, the received session key may be an encrypted session key. In addition, the session key used to generate the shared session key (hereinafter, private session key), may be a session key different from the message session key. The private session key may be generated by inputting the session key generated in the random number generator, to the random number function so that a session key having a bit length of 640 is to be a session key having a bit length of 256, and inputting it into a range check function to verify whether it is included in a range of an elliptic curve encryption function. The second electronic device (100-R) may decrypt the session key with the shared session key. At this time, the shared session key generated by the first electronic device (100-T) and the shared session key generated by the second electronic device (100-R) may be identical.

For example, the second electronic device (100-R) may share the session key with the first electronic device (100-T) through an Elliptic Curve Diffie-Hellman Key Exchange (ECDH) method.

In the step S2140, the second electronic device (100-R) may perform decryption of the message encrypted with the session key. At this time, the session key may be the session key decrypted in the step S2130. The second electronic device (100-R) may provide a decrypted message to a user.

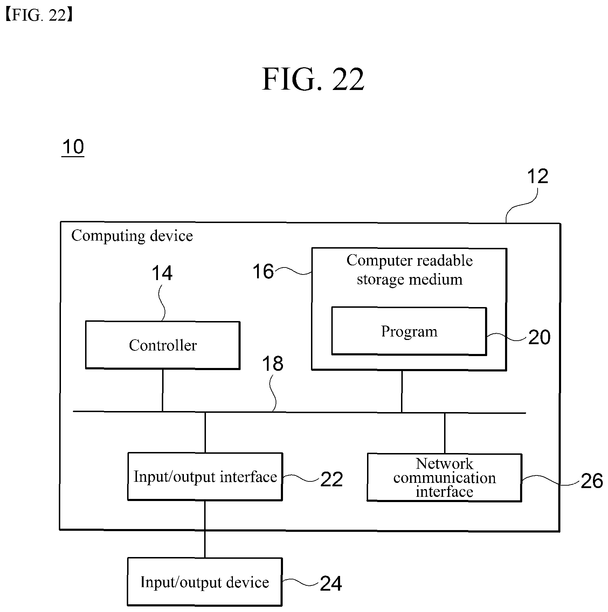

FIG. 22 is a block diagram showing a configuration of a computing device, according to one example. In the illustrated example, each component may have different functions and ability other than those described below, and may comprise an additional component other than those described below.

The illustrated computing environment (10) comprises a computing device (12). In one example, the computing device (12) may be one of the afore-mentioned electronic device (100) and the server (200), and may perform operations of the electronic device (100) and the server (200) described in FIG. 1a to FIG. 21.

The computing device (12) comprises at least one processor (14), a computer readable storage medium (16) and a communication bus (18). The processor (14) may allow the computing device (12) to operate according to the exemplary example mentioned above. For example, the processor (14) may execute at least one program stored in the computer readable storage medium (16). The at least one program may comprise at least one computer executable instruction, and the computer executable instruction may be composed to allow the computing device (12) to perform operations according to the exemplary example, when executed by the processor (14).

The computer readable storage medium (16) is composed to store computer executable instructions or program codes, program data and/or other appropriate forms of information. A program (20) stored in the computer readable storage medium (16) comprises a set of executable instructions by the processor (14). In one example, the computer readable storage medium (16) may be a memory (volatile memory such as random access memory, non-volatile memory, or a suitable combination thereof), at least one magnetic disk storage device, optical disk storage devices, flash memory devices, other forms of storage media which can be accessed by other computing device (12) and store desired information, or a suitable combination thereof.

The communication bus (18) interconnects various other components of the computing device (12) by comprising the processor (14) and computer readable storage medium (16).

The computing device (120) may also comprise at least one input/output interface (22) and at least one network communication interface (26) which provide interfaces for at least one input/output device (24). The input/output interface (22) and network communication interface (26) are connected to the communication bus (18). The input/output device (24) may be connected to other component of the computing device (12) through the input/output interface (22). The exemplary input/output device (24) may comprise a pointing device (mouse or trackpad, etc.), a keyboard, a touch input device (touchpad or touchscreen, etc.), a voice and sound input device, various kinds of input devices such as sensor devices and/or photographing devices, and/or an output device such as a display device, a printer, a speaker, and/or a network card. An exemplary input/output device (24) may be comprised inside the computing device (12) as one component consisting of the computing device (12), and may be connected with the computing device (12) with a separate device distinguished from the computing device (12).

According to one example disclosed, cryptographic communication can be performed by requesting lightweight hardware, a small amount of computation and low resource consumption. In addition, according to one example disclosed, cryptographic communication can be performed, by temporarily generating information required for cryptographic communication when necessary. In addition, according to one example disclosed, a key used for a cryptographic protocol can be shared by requesting lightweight hardware, a small amount of computation and low resource consumption. Furthermore, according to one example disclosed, a digital signature which generates and verifies a signature can be conducted, by requesting lightweight hardware, a small amount of computation and low resource consumption. In addition, according to one example disclosed, a digital signature which generates and verifies a signature can be performed, by temporarily generating information required for cryptographic communication when necessary.

Representative examples of the present invention are described in detail above, but those skilled in the art to which the present invention pertains will understand that various modifications can be made to the afore-mentioned examples within limits without departing from the scope of the present invention. Therefore, the scope of the present invention should not be limited to the examples described, and should be determined by not only claims described later but also equivalents to these claims.

### [DESCRIPTION OF REFERENCE NUMERALS]

10: Cryptographic communication system
100: Electronic device
100-T: First electronic device
100-R: Second electronic device
200: Server

## Claims

1. An electronic device, comprising a PUF circuit which inputs a random challenge signal into a physically unclonable function to generate a private key;
a communication device which receives an encrypted message by a temporarily generated message session key, and an encrypted message session key generated by encrypting the message session key with a public key corresponding to the private key, from a counterpart electronic device; and
a controller which obtains the message session key by decrypting the encrypted message session key with the private key, and decrypts the encrypted message with the message session key.

2. The electronic device according to claim 1,
wherein the communication device,
receives the random challenge signal from a server connected to each of the electronic device and the counterpart electronic device via a channel independent of the outside, and
the public key,
is generated, based on a private key retrieved in response to the random challenge signal, from a challenge response pair database previously stored for the electronic device.

3. The electronic device according to claim 2,
wherein the private key generated from the PUF circuit and the private key retrieved are identical.

4. The electronic device according to claim 1,
wherein the controller,
generates a second shared session key based on the private key and the encrypted session key, and decrypts the encrypted session key with the second shared session key.

5. The electronic device according to claim 5,
wherein the message session key,
is encrypted with a first shared session key generated based on the public key corresponding to the private key and the message session key, in the counterpart electronic device.

6. The electronic device according to claim 1,
wherein the electronic device,
further comprises a random number generator which generates a new random number that is not duplicated according to environmental conditions, when a new message is generated, and generates a new message session key based on the new random number.

7. The electronic device according to claim 1,
wherein the controller,
generates a signature ensuring integrity of transmission data, based on the private key, and
the communication device,
transmits the transmission data and the signature to the counterpart electronic device.

8. The electronic device according to claim 7,
wherein the electronic device,
further comprises a random number generator which generates a random number that is not duplicated according to environmental conditions, and generates a signature session key based on the random number, and
the controller,
generates the signature by inputting the private key and the signature session key, into a signature generation function that cannot predict an input signal corresponding to an output signal from the output signal.

9. The electronic device according to claim 7,
wherein the communication device,
communicates with a server connected to each of the electronic device and the counterpart electronic device via a channel independent of the outside, and
the public key,
is generated in response to the random challenge signal at the server and is transmitted to the counterpart electronic device, and
the signature,
is verified based on the public key, in the counterpart electronic device.

10. The electronic device according to claim 1,
wherein the communication device,
receives a certificate of the counterpart electronic device, from a server connected to each of the electronic device and the counterpart electronic device via a channel independent of the outside, and
the controller,
obtains a public key of the counterpart electronic device by verifing the certificate based on a private key generated through the PUF circuit.

11. The electronic device according to claim 10,
wherein the electronic device,
further comprises a random number generator which generates a random number that is not duplicated according to environmental conditions, and generates a message session key based on the random number, and
the controller,
encrypts data to be transmitted to the counterpart electronic device with the message session key, and encrypts the message session key with the public key of the counterpart electronic device.

12. The electronic device according to claim 10,
wherein the certificate,
comprises a first authentication code generated, at the server, based on a private key retrieved in response to the random challenge signal from the challenge response pair database previously stored for the electronic device, and one or more of a plurality of device information regarding the counterpart electronic device, and
the controller,
generates a second authentication code based on a private key generated through the PUF circuit and one or more of the plurality of device information, and authenticates the certificate based on the first authentication code and the second authentication code.

13. The electronic device according to claim 1,
wherein the electronic device,
further comprises a challenge signal generation device which generates a plurality of challenge signals, by receiving as an input an initial signal from the server connected via a channel independent of the outside through the communication device, and
the PUF circuit,
generates a plurality of response information corresponding, using each of the plurality of challenge signals as an input, and
the controller,
generates a plurality of challenge response pairs by pairing each of the plurality of challenge signals with a plurality of response information corresponding, and
the communication device,
transmits the plurality of challenge response pairs to the server.

14. A method, comprising generating a private key by inputting a random challenge signal into a physically unclonable function, through a PUF circuit;
receiving an encrypted message by a temporarily generated message session key, and an encrypted message session key generated by encrypting the message session key with a public key corresponding to the private key, from a counterpart electronic device;
obtaining the message session key by decrypting the encrypted message session key with the private key; and
decrypting the encrypted message with the message session key.

15. The method according to claim 14,
wherein the method,
further comprises generating a signature ensuring integrity of transmission data, based on the private key; and
transmitting the transmission data and the signature into the counterpart electronic device.
